**Europäisches Patentamt**

**European Patent Office**

**Office européen des brevets**

(19)

(11) Veröffentlichungsnummer : **0 143 282**
**B1**

(12) **EUROPÄISCHE PATENTSCHRIFT**

(45) Veröffentlichungstag der Patentschrift :
01.02.89

(51) Int. Cl.⁴ : **G 01 J 5/00**, G 01 J 3/28

(21) Anmeldenummer : **84111968.8**

(22) Anmeldetag : **05.10.84**

(54) **Verfahren zur berührungslosen, emissionsgradunabhängigen Strahlungsmessung der Temperatur eines Objektes.**

(30) Priorität : **28.11.83 DE 3343043**
**19.04.84 DE 3414984**

(43) Veröffentlichungstag der Anmeldung :
**05.06.85 Patentblatt 85/23**

(45) Bekanntmachung des Hinweises auf die Patenterteilung : **01.02.89 Patentblatt 89/05**

(84) Benannte Vertragsstaaten :
**DE FR GB IT NL SE**

(56) Entgegenhaltungen :
**EP–A– 0 129 150**
**DE–A– 3 149 523**
**US–A– 4 172 383**

(73) Patentinhaber : **Deutsche Forschungs- und Versuch-**
**sanstalt für Luft- und Raumfahrt e.V.**
**D-5300 Bonn (DE)**

(72) Erfinder : **Tank, Volker, Dipl.-Ing.**
**Stegenerstrasse 4**
**D-8088 Eching a.A. (DE)**

(74) Vertreter : **von Kirschbaum, Albrecht, Dipl.-Ing.**
**Hermann-Ehlers-Strasse 21a**
**D-8034 Germering (DE)**

EP 0 143 282 B1

**Beschreibung**

Die Erfindung betrifft ein Verfahren zur berührungslosen, emissionsgradunabhängigen Strahlungsmessung der Temperatur eines Objektes nach dem Oberbegriff des Anspruchs 1 oder 15. Es kann die Strahlungsmessung der Temperatur von natürlichen oder künstlichen Objekten im infraroten und/oder sichtbaren Spektralbereich erfolgen. Die große Bedeutung einer berührungslosen, emissionsgradunabhängigen Strahlungsmessung der Temperatur von Objekten für die Forschung und insbesondere für die Industrie ist hinlänglich bekannt.

Es ist bereits ein Verfahren und eine Vorrichtung zur berührungslosen Strahlungsmessung der Temperatur eines natürlichen oder künstlichen Objektes vorgeschlagen worden. Bei diesem Verfahren wird aus einer Reihe von zwei (drei) oder mehr Strahlungsmessungen in begrenzten (besonders ausgewählten) Spektralbereichen die Objekttemperatur, der Emissionsgrad des Objektes und die Umgebungstemperatur (aus der am Objekt reflektierten Umgebungsstrahlung) ausschließlich rechnerisch bestimmt (P 33 21 874.9, EP-A-129 150). Der Nachteil dieses Verfahrens zeigt sich dann, wenn Messungen beispielsweise in n Spektralbereichen durchgeführt werden, da dann n voneinander unabhängige Gleichungen in folgender Form vorliegen :

$$L_{M, \lambda_i} = \varepsilon_i \cdot L_{T_{Obj}, \lambda_i} + (1 - \varepsilon_i) L_{T_{Umg}, \lambda_i} \tag{1}$$

wobei

$L_{M, \lambda_i}$ die gemessene Strahldichte bei der Wellenlänge $\lambda_i$ ist,

$L_{T_{Obj}, \lambda_i}$ die nach Planck berechnte Strahldichte eines schwarzen Körpers der Temperatur $T_{Obj}$ bei der Wellenlänge $\lambda_i$ ist,

$\varepsilon_i$ der Emissionsgrad des Objekts bei der Wellenlänge $\lambda_i$ ist,

$L_{T_{Umg}, \lambda_i}$ die nach Planck berechnete Strahldichte eines schwarzen Körpers der Temperatur $T_{Umg}$ bei der Wellenlänge $\lambda_i$ ist,

$(1 - \varepsilon_i)$ der Reflexionsgrad des Objekts bei der Wellenlänge $\lambda_i$ ist,

$T_{Obj}$ die wahre Objekttemperatur und

$T_{Umg}$ die wahre Umgebungstemperatur ist.

Das bedeutet aber, es gibt unter der Voraussetzung einer homogenen Umgebungstemperatur und einer homogenen Objekttemperatur $n + 2$ unbekannte Größen, nämlich n unbekannte spektrale Emissionsgradwerte $\varepsilon_i$ und die unbekannten Temperaturen $T_{Obj}$ und $T_{Umg}$. Nachdem somit in n Gleichungen $n + 2$ Unbekannte vorliegen, ist das System so nicht lösbar. Der Nachteil solcher weiterentwickelter Temperaturmeßverfahren ist also darin zu sehen, daß dann vereinfachende Annahmen getroffen werden müssen, die wiederum dazu führen, daß die ermittelten Temperaturen (Objekt- und Umgebungstemperatur) und Emissionsgradwerte nicht exakt sind, und daß darüber hinaus im allgemeinen Meßfehler ebenfalls das oder die Ergebnisse beeinflussen.

Es ist deshalb Aufgabe der Erfindung, ein Verfahren zur berührungslosen emissionsgradunabhängigen Strahlungsmessung der Temperatur eines Objektes derart zu verbessern, daß damit nicht nur ohne vereinfachende Annahmen die Objekttemperatur, spektrale Emissionsgradwerte und die Umgebungstemperatur (oder Umgebungstemperaturen bei einer thermisch inhomogen Umgebung) exakt ermittelt werden können, sondern daß darüber hinaus auch ein Ausgleich unterschiedlicher Meßfehler bewirkt wird. Gemäß der Erfindung ist diese Aufgabe bei einem Verfahren nach dem Oberbegriff des Anspruchs 1 durch die Merkmale im kennzeichnenden Teil des Anspruchs 1 gelöst. Vorteilhafte Weiterbildungen der Erfindung sind in den Unteransprüchen 2 bis 14 angegeben.

Ferner ist es Aufgabe der Erfindung ein Verfahren und eine Vorrichtung zur berührungslosen, emissionsgradunabhängigen Strahlungsmessung der Temperatur eines Objektes zu schaffen, mittels welchem bzw. welcher ein bestimmtes oder überbestimmtes Gleichungssystem erhalten werden kann, ohne daß hierzu die Objekttemperatur oder die Umgebungstemperatur oder andere von der verwendeten Vorrichtung unabhängige Größen geändert werden müssen. Gemäß der Erfindung ist dies bei einem Verfahren zur berührungslosen, emissionsgradunabhängigen Strahlungsmessung der Temperatur eines Objektes nach dem Oberbegriff des Anspruchs 15 durch die Merkmale im kennzeichnenden Teil des Anspruchs 15 erreicht. Vorteilhafte Weiterbildungen des erfindungsgemäßen Verfahrens sind in den Unteransprüchen 16 und 17 angegeben. Ferner ist die gestellte Aufgabe mittels einer Vorrichtung zur Durchführung des Verfahrens durch die Merkmale im kennzeichnenden Teil des Anspruchs 18 gelöst. Vorteilhafte Weiterbildungen der erfindungsgemäßen Vorrichtung sind in den Unteransprüchen 19 bis 21 angegeben.

Das Verfahren nach den Ansprüchen 1 bis 14 basiert auf folgenden Gleichungen ;

$$L1_{M, \lambda_i} = r_i \cdot \tau_i \left\{ \varepsilon_i \cdot L_{T1_{Obj}, \lambda_i} + (1 - \varepsilon_i) L_{T_{Umg}, \lambda_i} \right\} \tag{2}$$

$$L2_{M, \lambda_i} = r_i \cdot \tau_i \left\{ \varepsilon_i \cdot L_{T2_{Obj}, \lambda_i} + (1 - \varepsilon_i) L_{T_{Umg}, \lambda_i} \right\} \tag{3}$$

für $i = 3, ..., n$

wobei

$L1_{M,\lambda_i}$ die gemessen Strahldichte bei der Wellenlänge $\lambda_i$ (Zentrumswellenlänge) und der Objekttemperatur T1 ist ;

$L2_{M,\lambda_i}$ die gemessene Strahldichte bei der Wellenlänge $\lambda_i$ und der Objekttemperatur T2 ist ;

$r_i$ die spektrale Empfindlichkeit des Meßgeräts bei der Wellenlänge $\lambda_i$ ist ;

$\tau_i$ die Transmission der Atmosphäre bei der Wellenlänge $\lambda_i$ ist ;

$T1_{Obj}$ die Objekttemperatur T1 und

$T2_{Obj}$ die Objekttemperatur T2 ist.

Hierbei gilt explizit :

$$L_{T1_{Obj}} = \frac{c_1}{\pi\lambda^5} \cdot \frac{1}{e^{\frac{c_2}{\lambda \cdot T1_{Obj}}} - 1} \tag{4}$$

wobei

$c_1 = 3{,}7418$ [W cm$^2$ $\mu$m$^4$] ; $c_2 = 1{,}4388$ [$\mu$m K] ; $\pi = 3{,}141843$

$L_{T1_{Obj}}$ die Strahldichte nach Planck für einen Schwarzen Körper der Temperatur $T1_{Obj}$,

$\lambda$ die Wellenlänge [$\mu$m] und

$T1_{Obj}$ die Objekttemperatur T1 [K] ist.

Gl.(4) gilt entsprechend auch für $T2_{Obj}$. Die Gleichungen (2) und (3) beschreiben vollständig die Strahldichte, die an natürlichen Objekten gemessen wird, nämlich die Summe aus emittierter Strahlung, die durch die Temperatur und den spektralen Emissionsgrad des Objekts bedingt ist, und aus reflektierter Umgebungsstrahlung (die durch die Umgebungstemperatur und den Reflexionsgrad $\zeta_i = 1 - \varepsilon_i$ des Objektes bedingt ist).

Hat ein interessierendes Objekt die Temperatur $T1_{Obj}$ und sind beispielsweise nur die Wellenlängen (Zentrumswellenlängen) $\lambda_i$ des verwendeten Spektralmeßgeräts bekannt (und ist die Breite aller Spektralbereiche identisch), dann enthält die Gl.(2) für n Spektralbereiche die unbekannten Faktoren : $T1_{Obj}$, $T_{Umg}$, $r_i \cdot \tau_i$ und $\varepsilon_i$. Es liegen also $2n + 2$ unbekannte Faktoren vor ; dabei wurde vorausgesetzt, daß die Faktoren $r_i$ (die spektrale Empfindlichkeit des Meßgeräts) und $\tau_i$ (der Transmissionsgrad der Atmosphäre) nur als Produkt, als welches sie auftauchen, ermittelt werden sollen, und die Kenntnis der einzelnen Faktoren hier nicht interessiert.

Den $2n + 2$ Unbekannten stehen bei Gl.(2) nur n Meßwerte gegenüber ; eine (exakte) Lösung des Systems ist also nicht möglich. Ändert nun das Objekt seine Temperatur auf den Wert $T2_{Obj}$, so gilt zusätzlich Gl.(3) ; damit kommt einerseits eine weitere Unbekannte hinzu, nämlich $T2_{Obj}$, und andererseits kommen aber n weitere Meßwerte hinzu. Somit stehen 2n Meßwerten $2n + 3$ Unbekannte gegenüber, so daß auch dieses System nicht exakt lösbar ist. Ändert nun das Objekt seine Temperatur auf den Wert $T3_{Obj}$, so liegen $2n + 4$ Unbekannte gegenüber 3n Meßwerten vor ; d. h. für n = 4 Spektralbereiche (in denen gemessen wird) ist das System mit 12 Meßwerten und 12 Unbekannten bereits exakt lösbar (wobei der Ausdruck exakt unter der Annahme zu verstehen ist, daß die Messungen fehlerfrei sind). Wird in n = 5 Spektralbereichen gemessen, so ist das Gleichungssystem mit 15 Messungen und 14 Unbekannten bereits überbestimmt ; die Lösung erfolgt also iterativ (durch eine Ausgleichsrechnung), wobei durch die Überbestimmung ein Ausgleich von Meßungenauigkeiten bewirkt wird.

Die Differenz der Anzahl der Meßwerte und der Anzahl der Unbekannten $3n - (2n + 4) = n - 4$ gibt dabei an, wie groß die Zahl der Meßwerte ist, die zusätzlich zur Zahl der zur Lösung notwendigen Meßwerte zum Ausgleich der Meßungenauigkeiten beiträgt.

Die obigen Ausführungen gelten natürlich nur, wenn zu den Zeitpunkten der Messungen $r_i$, $\tau_i$ und $T_{Umg}$ konstant sind, was bei unverändertem Meßaufbau und unveränderten Umgebung und wenn die Zeiten zwischen den Messungen nicht lang sind, sichergestellt ist, und wenn ferner $\varepsilon_i$ für $T1_{Obj}$, $T2_{Obj}$ und $T3_{Obj}$ jeweils denselben Wert hat, eine Forderung, die in weiten Temperaturbereichen von den meisten Materialien und Objekten erfüllt wird. Erst im Bereich von hohen Temperaturen (Glut) und bei der Änderung von Aggregatzuständen kommt es zu einer deutlichen Temperaturabhängigkeit des Emissionsgrades.

Zur Durchführung des Verfahrens wird also die spektrale Strahldichte des Objekts bei drei verschiedenen Objekttemperaturen z. B. in jeweils n = 4 Spektralbereichen aufgenommen, und aus diesen 12 Meßwerten werden die 12 unbekannten Größen exakt bestimmt. Ist n > 4, so liegen $n - 4$ Meßwerte vor, die durch den Ausgleich von Meßungenauigkeiten zur Genauigkeit der Ergebnisse beitragen.

Natürlich ist es möglich, das verwendete Spektrometer in bekannter Art zu eichen, d. h. seine spektralen Empfindlichkeitswerte $r_i$ (mit Hilfe von Eichstrahlern, d. h. schwarzen Körpern) zu ermitteln und zusätzlich seine Spektralbereiche so auszuwählen, daß sie in Bereichen hoher atmosphärischer Transmissionsgrade $\tau_i$ liegen, so daß $\tau_i = 1$ gesetzt werden kann. (Solche Bereiche lassen sich in bekannter Weise durch Messung oder Modellrechnung — beispielsweise mit Hilfe der « LOWTRAN »- und « HITRAN »-Modelle — für jede Meßentfernung ermitteln). Es wird damit die Zahl der unbekannten Größen auf $n + 2$ verringert, so daß durch Messungen bei zwei (2) Temperaturen des Objekts, welche zu 2n Meßwerten führen, für n = 2 bereits 4 Unbekannte und 4 Meßwerte vorliegen und somit eine Lösung möglich ist, und für n > 2 jeweils n — 2 Meßwerte einen Ausgleich bewirken.

Natürlich können noch weitere unbekannte Größen eingeführt werden, wie z. B. in thermisch inhomogener Umgebung verschiedene Umgebungstemperaturen etc., welche bei einer entsprechend großen Anzahl n der Spektralbereiche und einer entsprechenden Anzahl verschiedener Objekttemperaturen exakt oder sogar ausgleichend ermittelt werden können.

Ebenso ist es möglich, alle einmal gewonnenen Erkenntnisse in folgenden Meßschritten zu nutzen ; ist beispielsweise der Temperaturbereich gefunden, in dem der Emissionsgrad temperaturunabhängig ist, so kann der einmal ermittelte spektrale Emissionsgrad $\varepsilon_i$ bei den folgenden Messungen als bekannt verwendet werden. Das heißt, solange die Objekttemperatur in dem bestimmten Bereich liegt, kann jede Spektralmessung bei nur einer Temperatur des Objekts bereits ausgleichend zur Bestimmung der Objekttemperatur und der Umgebungstemperatur verwendet werden ; dies gilt entsprechend auch für die spektrale Empfindlichkeit $r_i$ des Spektrometers und den Transmissionsgrad $\tau_i$ der Atmosphäre (welche beide natürlich temperaturunabhängig sind). Sind beispielsweise diese Größen ($\varepsilon_i$, $\tau_i \cdot r_i$) mit n = 4 und aus 3n = 12 Meßwerten ermittelt, genügen in den weiteren Schritten n = 4 Meßwerte zur ausgleichenden Bestimmung der zwei Unbekannten $T_{Obj}$ und $T_{Umg}$. Es ist also für sehr viele Anwendungen möglich, das Meßgerät nur einmal oder nur in größeren Zeitabständen zu Kontrollzwecken bei mehreren Temperaturen, was auch durch künstliche Heizung erreichbar ist, zu vermessen und die daraus gewonnenen Größen beispielsweise für Überwachungen in längeren Zeiträumen zu verwenden.

Mit dem erfindungsgemäßen Verfahren ist es also nicht nur möglich, die Temperatur eines Objektes exakt zu ermitteln, sondern es können auch sein spektraler Emissionsgrad und die Temperatur der Umgebung (oder die Temperaturen thermisch inhomogener Umgebung) ermittelt werden. Ein ganz besonderer Vorteil ist dabei, daß außerdem aus der Strahlungsmessung des Objektes — also ohne eine gesonderte Eichung — auch der Einfluß der spektralen Empfindlichkeit des Meßgeräts und der Atmosphäre bestimmt wird. Das Verfahren ist also « selbstkalibrierend » und ein Driften der spektralen Empfindlichkeit des Meßgeräts verfälscht die Meßergebnisse nicht ; damit ist eine Eichung und Nacheichung des Meßgeräts nicht erforderlich, was ein unschätzbarer Vorteil für routinemäßig verwendete Meßgeräte ist.

Ein weiterer besonderer Vorteil des erfindungsgemäßen, vorstehend beschriebenen Verfahrens besteht darin, daß bei einer entsprechend hohen Anzahl der Spektralbereiche und/oder der Objekttemperaturen die Meßergebnisse ausgleichend ermittelt, d. h. Meßungenauigkeiten ausgeglichen werden.

Gemäß einer bevorzugten Ausführungsform der erfindungsgemäßen Vorrichtung weist diese m (m $\geq$ 1) Strahlungsquellen auf, die beispielsweise für Messungen im infraroten Bereich auf m verschiedene Temperaturen aufgeheizt werden und dadurch m verschiedene Intensitäten haben. Mit Hilfe einer entsprechenden Optik und Mechanik wird die Strahlung einer jeden der m Strahlungsquellen nacheinander auf das Objekt, dessen Temperatur zu bestimmen ist, gelenkt, und zwar zweckmäßigerweise so, daß diese Strahlung sowohl den Winkelbereich des verwendeten Spektrometers als auch dessen auf dem Objekt überdeckte Fläche vollständig ausleuchtet. Anders ausgedrückt bedeutet dies, daß der Raumwinkel der erfindungsgemäßen Vorrichtung gleich dem oder größer als der des Spektrometers ist.

Selbstverständlich sind die Strahlungsquellen den Spektralbereichen der Messung anzupassen, d. h. im Infraroten werden Schwarzkörper, beispielsweise Hohlraumstrahler verwendet, die im übrigen auch im sichtbaren Bereich verwendet werden können ; darüber hinaus können beispielsweise auch Wolframbandlampen oder Quarzhalogenlampen usw. verwendet werden. Im Ultravioletten kommen beispielsweise u. a. Bogenlampen zur Anwendung. Für alle Spektralbereiche eignen sich jedoch besonders entsprechende Laser bzw. Laserdioden, wie nachstehend noch im einzelnen erläutert wird.

Nachfolgend wird die Erfindung unter Bezugnahme auf die anliegenden Zeichnungen im einzelnen näher erläutert. Es zeigen :

Fig. 1 und 2 graphische Darstellungen des Transmissionsgrades der Atmosphäre in Abhängigkeit von der Wellenlänge für Weglängen von 1 m bzw. 3 m, die mit dem Modell « Lowtran 5 » unter Verwendung des Modells « Sommer in mittlerer Breite » bei einer spektralen Auflösung von 5 cm$^{-1}$ in einer Höhe von 0,5 km bei einer Sichtweite von 23 km berechnet sind ;

Fig. 3 eine schematische Darstellung einer Vorrichtung zur Durchführung des Verfahrens nach den Ansprüchen 1 bis 14 ;

Fig. 4 schematisch eine ausführliche Darstellung beispielsweise einer Strahlungsmessung, wobei die wichtigsten Strahlungsteile angegeben sind ;

Fig. 5 eine schematische Darstellung einer Vorrichtung zur Durchführung des Verfahrens nach den Ansprüchen 15 bis 17 mit m Strahlungsquellen ;

Fig. 6 eine schematische Darstellung einer fokussierbaren Optik aus einem Strahlteiler mit nachgeordnetem Teleskop, und

Fig. 7 eine weitere schematische Darstellung einer Vorrichtung zur Durchführung des Verfahrens nach den Ansprüchen 15 bis 17 mit n Strahlungsquellen in Form von Laserdioden.

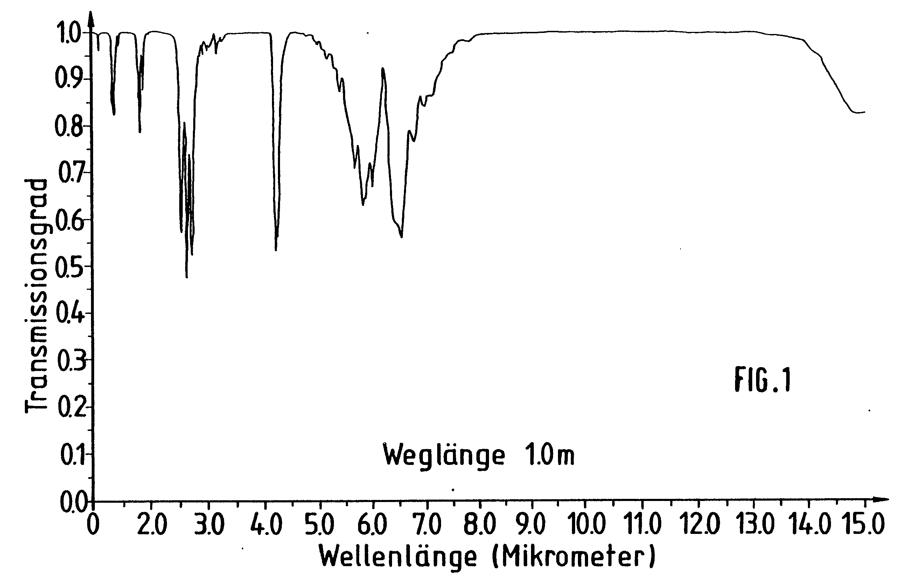

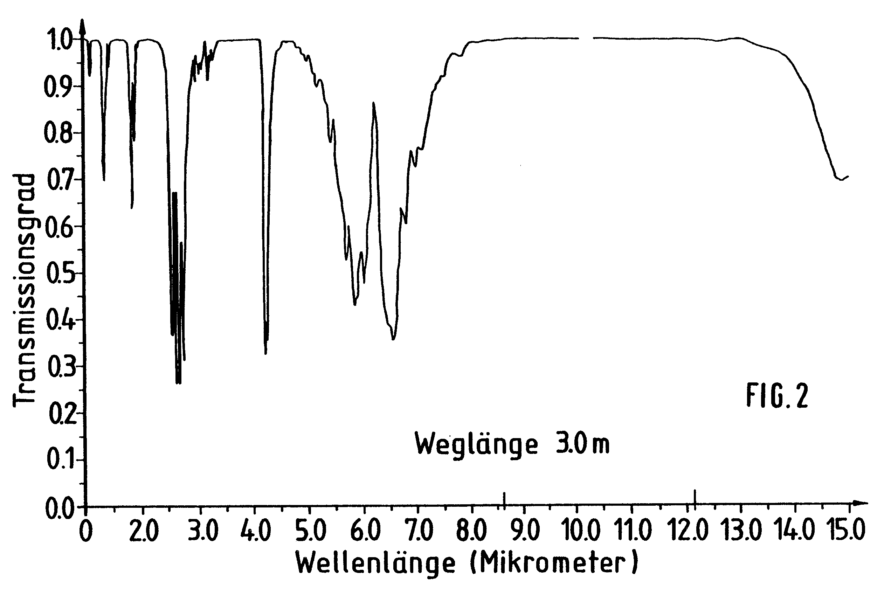

Der Transmissionsgrad der Atmosphäre in Fig. 1 und 2 ist für einen Wellenlängenbereich von 1 μm bis 15 μm dargestellt. Das Verfahren gemäß der Erfindung ist selbstverständlich nicht auf diesen Wellenlängenbereich beschränkt, sondern vom ultravioletten Spektralbereich kontinuierlich bis zum sehr langwelligen Infrarotbereich, also bis in den Bereich der Millimeterwellen anwendbar. Der in den Fig. 1 und 2 dargestellt Bereich, einschließlich des nicht sichtbaren Spektralbereichs ist allerdings besonders gut zur

4

Durchführung des Verfahrens bei den üblicherweise vorkommenden, natürlichen und künstlich erzeugten Temperaturen der Umwelt einschließlich industrieller Prozesse geeignet. Natürlich ist für Weglängen von 1 m bis 3 m im sichtbaren Spektralbereich der Transmissionsgrad der Atmosphäre gleich eins ($\tau_i = 1$).

Zur Durchführung des Verfahrens gemäß der Erfindung werden u. a. aus Energiegründen (Strahlungsenergie) Spektralbereiche ausgewählt, in denen der Transmissionsgrad der Atmosphäre nahe an eins ($\tau_i = 1$) ist ; wie aber aus den Fig. 1 und 2 ersichtlich, ist durchaus der gesamte dort dargestellte Bereich geeignet. Für größere Weglängen wird der Transmissionsgrad der Atmosphäre in bestimmten Bereichen (z. B. etwa von 2,6 $\mu$m bis 2,8 $\mu$m oder etwa von 5,5 $\mu$m bis 7,3 $\mu$m, etc.) gleich null ($\tau_i = 0$) ; eine Messung in solchen Bereichen ist dann natürlich nicht mehr sinnvoll ; das Verfahren führt aber auch mit solchen Meßwerten noch zu einem Ergebnis, wenn neben diesen Meßwerten noch genügend andere vorhanden sind, in denen Strahlung vom Objekt zum Meßgerät gelangt, solange die Anzahl der Unbekannten gleich der oder kleiner als die Anzahl der Meßwerte (die noch Strahlungsenergie enthalten) ist.

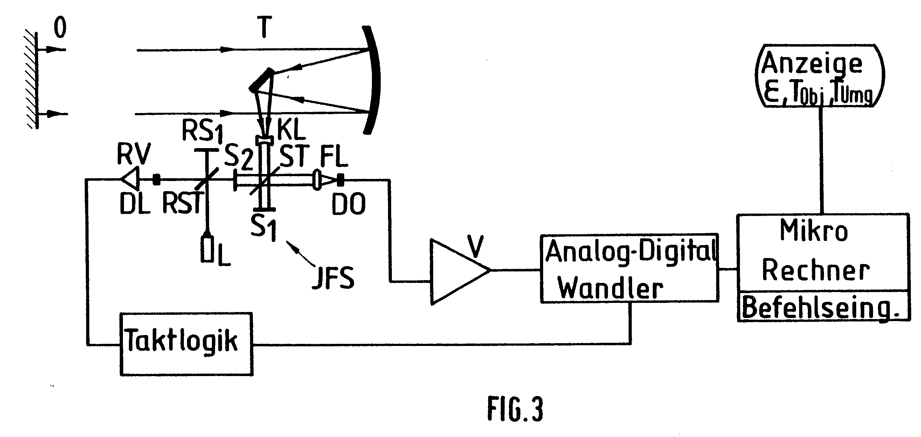

Bei dem in Fig. 3 dargestellten Ausführungsbeispiel wird die von einem Objekt O ausgehende Strahlung von einem Teleskop T eines Interferometerspektrometers IFS (eines Interferometers nach Michelson) gesammelt und über eine Kollimatorlinse KL in das Interferometer gelenkt. In dem Interferometer IFS wird in bekannter Weise mittels eines Strahlteilers ST, eines festen Spiegels $S_1$ und eines beweglichen Spiegels $S_2$ sowie einer Feldlinse FL unter Einbeziehung eines Detektors DO ein Interferogramm der einfallenden Strahlung erzeugt. Das Interferogramm wird in Form eines elektrischen Signals in einem elektrischen Verstärker V verstärkt und von einem Analog-Digitalwandler digitalisiert, und zwar mit Hilfe eines Wandlertaktes, der in bekannter Weise unter Zuhilfenahme eines weiteren festen Spiegels $RS_1$, eines weiteren Strahlteilers RST eines Referenzinterferometers, eines weiteren Detektors DL des Referenzinterferometers und eines Ausgangsverstärkers RV aus den in dem Referenzinterferometer zur Positionsmessung des Spiegels $S_2$ verwendeten Laserlichts eines Lasers L (beispielsweise eines HeNe-Lasers) gewonnen wird.

Die digitalisierten Meßwerte (Interferogrammwerte) werden entweder unmittelbar in einem Mikrorechner durch eine mathematische Fouriertransformation in das Spektrum der eingefallenen Strahlung umgerechnet und dann als Spektrum in einem dem Mikrorechner zugeordneten Digitalspeicher abgespeichert, oder erst auf diesem Speicher abgelegt und später transformiert. Gleichartige Messungen erfolgen nach Änderung der Objekttemperatur oder der Umgebungstemperatur, o. ä. Nach der Berechnung aller entsprechenden Spektren, die in Abhängigkeit von der spektralen Auflösungskraft des Interferometers je eine Anzahl von einigen zehn bis zu mehreren zehntausend oder mehr spektralen Meßwerten enthalten, wird aus allen Spektralwerten und/oder aus einer größeren oder kleineren Zahl ausgewählter Werte und/oder aus verschiedenen Gruppen ausgewählter Werte das Gleichungssystem (2), (3) usw. gebildet und gelöst oder ausgleichend gelöst. Alle ermittelten Werte oder einzelne, wie beispielsweise nur die Objekttemperaturen, können dann mit Hilfe eines Anzeigegeräts angezeigt werden.

Der Mikrorechner verfügt über eine Befehlseingabeeinheit, über die alle das Verfahren betreffenden Befehle in bekannter Weise flexibel aufgerufen, verknüpft, gestartet, etc. werden können (beispielsweise Datenaufnahme vom Interferometerspektrometer, Fouriertransformation, Aufstellung und Lösung des Gleichungssystems etc.).

In Abwandlung der Ausführungsform nach Fig. 3 ist es auch möglich, andere Spektralradiometer zu verwenden (beispielsweise Filterradiometer). Grundsätzlich kann dabei eine beliebige Anzahl von Spektralbereichen unter der Bedingung verwendet werden, daß das Gleichungssystem lösbar ist. Die Speicherung, Verarbeitung und Ausgabe der Meßwerte und der Ergebnisse kann auf verschiedenen Medien und Rechnern durchgeführt werden. Da im allgemeinen eine möglichst geringe Anzahl von Meßwerten erforderlich sein soll, ist zur Datenerfassung und Berechnung der Ergebnisse ein Mikrorechner ausreichend, so daß die beschriebene Vorrichtung zur Durchführung des Verfahrens auch bei Verwendung einfacher, fortschrittlicher (bisher recht aufwendiger) Interferometerspektrometer als transportables Gerät gestaltet werden kann, das breite und wirtschaftliche Anwendungsmöglichkeiten eröffnet.

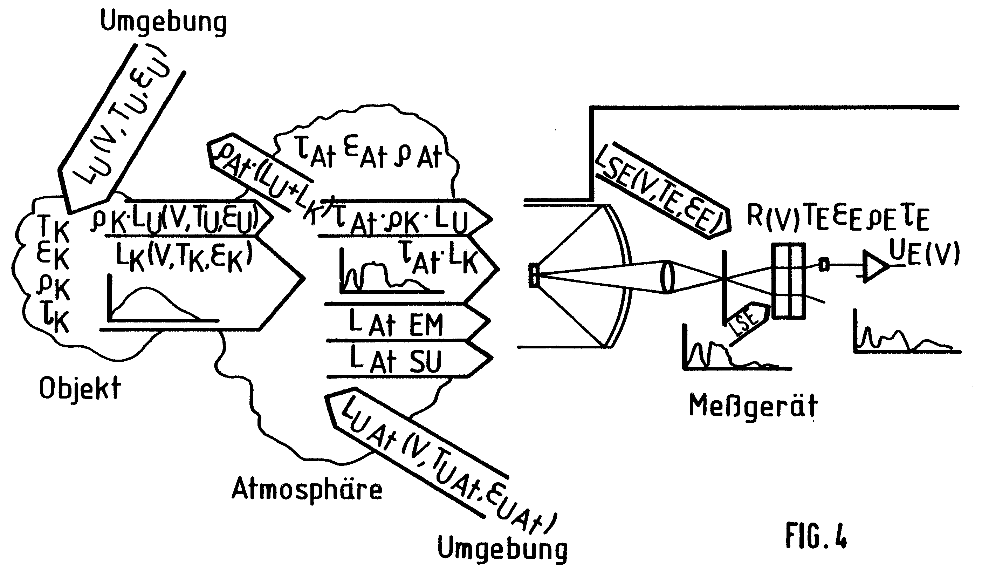

Fig. 4 zeigt schematisch in ausführlicher Darstellung beispielhaft eine Strahlungsmessung, wobei die wichtigsten auftretenden Strahlungsteile wiedergegeben sind. Hierbei bedeuten in Fig. 4 :

$v$ die Wellenzahl [cm$^{-1}$] (inverse Wellenlänge),

bezüglich der Umgebung des Objekts :

$L_u$ die Strahldichte der Umgebung als eine Funktion von $v$ und :

$T_u$ die Umgebungstemperatur

$\varepsilon_u$ der (die) Emissionsgrad(e) der Umgebung (die selbst eine Funktion von $v$ sind) bezüglich des Objekts :

$L_K$ die Strahldichte des Objekts, als Funktion von und :

$T_K$ die Objekttemperatur

$\varepsilon_K$ den Emissionsgrad

ferner

$\zeta_K$ den Reflexionsgrad und

$\tau_K$ den Transmissionsgrad

des Objekts, die jeweils Funktionen von $v$ sind ;

bezüglich der Atmosphäre :

$\tau_{At}$ den Transmissionsgrad ⎞
$\varepsilon_{At}$ den Emissionsgrad ⎟ der Atmosphäre, die
$\zeta_{At}$ den Reflexionsgrad ⎠ jeweils Funktionen von $\nu$ sind

$L_{AtEM}$ die Strahldichte der von der Atmosphäre emittierten Strahlung, die Funktion der Atmosphärentemperatur, von $\nu$ und von $\varepsilon_{At}$ ist ;
$L_{AtSu}$ die Strahldichte der an der Atmosphäre gestreuten Strahlung von Objekten der Umgebung (der Atmosphäre)

bezüglich der Umgebung der Atmosphäre (anders als die des Objekts) :

$L_{uAt}$ die Strahldichte der Umgebung der Atmosphäre, die Funktion von $\nu$ ist und :
$T_{uAt}$ die Temperatur der Umgebung der Atmosphäre und
$\varepsilon_{uAt}$ den Emissionsgrad der (Objekte) der Umgebung der Atmosphäre bezüglich des Meßgerätes :

$L_{SE}$ die Strahldichte des Meßgeräts (Strahlungsempfängers), die eine Funktion von $\nu$ ist und :
$T_E$ die Temperatur des Meßgeräts
$\varepsilon_E$ den Emissionsgrad der inneren Oberflächen des Meßgeräts ;
ferner :

$\varepsilon_E$ den Emissionsgrad ⎰ der inneren Komponen-
$\tau_E$ den Transmissionsgrad ⎱ ten des Meßgerätes

$R(\nu)$ die spektrale Empfindlichkeit des Meßgeräts als Funktion der Wellenzahl $\nu$, wobei die Empfindlichkeit dem $r_i$ in den vorherigen Gleichungen (dort als Funktion der Wellenlänge $\lambda$) entspricht und
$U_{E(\nu)}$ das aus der empfangenen Strahlung vom Detektor erzeugte elektrische Signal des Meßgeräts, das eine Funktion von $\nu$ ist.

In Fig. 4 sind die Teile « Objekt, Umgebung, Atmosphäre, Meßgerät » unterschieden, und es ist angegeben, welche Strahlungsanteile wo auftreten, bzw. wie sie verändert werden ; dazu sind kleine Koordinatensysteme an vier Orten auf dem Weg der Strahlung eingezeichnet, welche qualitative Spektren enthalten, die andeuten, wie die spektrale Charakteristik der Objektstrahlung vom Ort des Objektes (wo das Planck'sche Gesetz charakterisierend ist, für $\varepsilon_K(\nu) = $ const.) durch die Einflüsse von Umgebung, Atmosphäre und Meßgerät fortlaufend verändert wird.

Das Objekt wird durch seine Temperatur und seinen spektralen Emissions-, Reflexions- und Transmissionsgrad beschrieben ; entsprechende Größen beschreiben auch die Umgebung, wobei Objekt und Umgebung hier der Einfachheit halber hinsichtlich der sie beschreibenden Größen als räumlich homogen angesehen werden (wodurch der Transmissionsgrad des Objektes null gesetzt wird). Es wird also $\varepsilon_K + \zeta_K = 1$, d. h., ist gegebenenfalls $\tau_K \neq 0$, so wird angenommen, daß die Umgebungsstrahlung das Objekt entsprechend $\tau_K$ von allen Seiten, also auch von der Rückseite, durchdringt. Die vom Objekt ausgehende Strahlung ist daher die Summe von Objektstrahlung und reflektierter Umgebungsstrahlung. Auf dem Weg durch die Atmosphäre werden beide Anteile durch den spektralen Transmissionsgrad der Atmosphäre (multiplikativ) verändert und (additiv) erweitert durch die von der Atmosphäre selbst emittierte Strahlung und die an der Atmosphäre gestreute Umgebungsstrahlung (wobei diese Umgebung zumindest für lange Wege durch die Atmosphäre eine andere ist als die Umgebung des Objektes). Auf dem Weg durch das Meßgerät (von der Optik zum Detektor) überlagern sich (additiv) weitere Strahlungsanteile der empfangenen Strahlung, nämlich die von den inneren Komponenten und Oberflächen des Meßgeräts emittierte Strahlung. Darüber hinaus wird die Strahlung (multiplikativ) von Komponenten, wie Filtern, Linsen, Spiegeloberflächen etc. des Meßgeräts, sowie von der spektralen Empfindlichkeit des Detektors beeinflußt (falls diese nicht konstant im Meßbereich ist). Diese multiplikativen Einflüsse werden im Faktor $R(\nu)$ (bzw. $r_i$), der spektralen Empfindlichkeit des Meßgeräts zusammengefaßt, während alle Strahlungsanteile, die vom Meßgerät stammen, zur (Eigenstrahlung) Strahldichte $L_{SE}$ zusammengefaßt werden.

Alle hier beschriebenen Größen sind zunächst unbekannt ; sie lassen sich aber alle bestimmen, indem entsprechend dem Verfahren nach den Ansprüchen 1 bis 14 in genügend großer Zahl von Wellenlängenbereichen und bei genügend vielen verschiedenen Temperaturen des Objekts oder der Umgebung, etc. Strahlungsmessungen durchführt, so daß ein bestimmtes ober überbestimmtes Gleichungssystem erhalten wird. Ist man allerdings, wie im vorliegenden Fall, hauptsächlich an der Bestimmung der Temperatur des Objekts interessiert, so ist es natürlich zweckmäßig, durch entsprechende Auslegung des Meßgerätes und der Meßanordnung möglichst viele Größen (an denen man nicht interessiert ist) vernachlässigbar zu machen.

Wird beispielsweise das Meßgerät als Interferometerspektrometer nur mit spiegelnder Optik ausgeführt und die Temperatur des ganzen Gerätes stabilisiert, so gilt in guter Näherung die Zusammenfassung der Geräteeigenstrahlung zu einer Strahldichte $L_{SE}$ gegeben durch die Temperatur $T_E$ des Gerätes. Der Emissionsgrad $\varepsilon_E$ der inneren Oberflächen des Gerätes wird durch eine weitgehende Verwendung gleicher Materialien einheitlich gehalten. Wenn es die Meßaufgabe erlaubt, wird ein Detektor mit einer wellenlängenunabhängigen Empfindlichkeit verwendet. Zweckmäßig werden die Wellenlängenbereiche der Messung so ausgewählt, daß in ihnen die Transmission der Atmosphäre zu $\tau_{At} = 1$ gesetzt werden kann. Darüber hinaus wird der (additive) Anteil der Strahlungsanteile der Atmosphäre $L_{AtSu}$ und $L_{AtEM}$ vernachlässigbar, indem der Weg zwischen Meßgerät und Objekt kurz gehalten wird. Gegebenenfalls wird durch entsprechende Abschirmungen (z. B. durch einen Tubus am Meßgerät der nahe aus Objekt reicht) eine homogene Umgebungsstrahlung erreicht, so daß also nur eine Umgebungstemperatur zugrunde gelegt werden muß.

Bei Messung in n Wellenlängenbereichen und bei m verschiedenen Objekttemperaturen sind dann unbekannt :

$m \times T_{Obj}$ die Objekttemperatur
$n \times \varepsilon_i$ der spektrale Emissionsgrad des Objektes
$1 \times T_{Umg}$ die Umgebungstemperatur
$1 \times T_M$ die Temperatur des Meßgeräts (innen)
$1 \times r_i = const$ die spektrale Empfindlichkeit des Meßgeräts

also $n+m+3$ unbekannte Größen stehen n.m Meßwerten gegenüber. Für $m = 2$ Objekttemperaturen und $n = 5$ Wellenlängenbereiche ist also schon eine selbstkalibrierende Messung möglich. Natürlich ist generell eine Vergrößerung der Anzahl m der Objekttemperaturen wirkungsvoller als die Verwendung von mehr Wellenlängenbereichen. Unter der Voraussetzung, daß $r_i \neq const$, also wellenlängenabhängig ist, hat man n unbekannte Werte von $r_i$, also es liegen $2n+m+2$ Unbekannte gegenüber n.m Meßwerten vor und mit $m = 3$ und $n = 5$ ist das Gleichungssystem bestimmt.

Für diese Beispiele ist der Emissionsgrad der inneren Oberflächen des Meßgeräts zu $\varepsilon_E = const = 1$ angenommen worden.

Es gelten dann folgende Gleichungen :

$$L1_{M, \lambda_i} = r_i \left\{ \varepsilon_i \cdot L_{T1_{Obj}, \lambda_i} + (1 - \varepsilon_i) L_{T_{Umg}, \lambda_i} + L_{T_E, \lambda_i} \right\} \tag{5}$$

$$L2_{M, \lambda_i} = r_i \left\{ \varepsilon_i \cdot L_{T1_{Obj}, \lambda_i} + (1 - \varepsilon_i) L_{T_{Umg}, \lambda_i} + L_{T_E, \lambda_i} \right\} \tag{6}$$

$$\vdots \qquad\qquad \vdots \qquad\qquad (\vdots)$$

Die verschiedenen Strahlungsanteile (in obigen Ausführungen) haben natürlich in den verschiedenen Wellenlängenbereichen unterschiedliche Bedeutung ; so wird beispielsweise die Eigenstrahlung des Geräts im Sichtbaren meist zu vernachlässigen sein ; (ähnliches gilt für die Emissions- etc. -grade). Die Erläuterungen haben allgemeine Gültigkeit, sind aber besonders auf den für die technische Realisierung wohl wichtigsten Infrarotstrahlungsbereich abgestimmt.

Mit dem erfindungsgemäßen Verfahren ist auch noch eine weitere Anwendung durchführbar, die allerdings im allgemeinen in der Praxis eine untergeordnete Bedeutung hat : Liegen Messungen bei m Objekttemperaturen in je n Spektralbereichen vor und sind außer diesen Meßwerten sonst keine Informationen vorhanden, insbesondere auch nicht darüber, bei welchen n Wellenlängen (Spektralbereichen) die Messungen durchgeführt wurden (außer der Tatsache, daß ihre Lage ungefähr bekannt sein sollte, beispielsweise im Sichtbaren oder im Bereich 3 bis 5 μm oder im Bereich 8 bis 14 μm), so können alle unbekannten Größen, insbesondere auch die Spektralbereiche (Wellenlängen) der Messungen errechnet oder ausgleichend errechnet werden.

Sind beispielsweise :
n Spektralbereiche der Messungen
n Werte des spektralen Emissionsgrades des Objektes
n Werte $r_i \cdot \tau_i$ (Produkt von spektraler Empfindlichkeit des Meßgeräts und der spektralen Transmission der Atmosphäre)
m Objekttemperaturen
eine Umgebungstemperatur und
eine Temperatur des Meßgeräts unbekannt,
dann liegen $3n+m+2$ Unbekannte gegenüber wieder n.m Meßwerten vor. Dann ist beispielsweise für $n = 6$ und $m = 4$ das Gleichungssystem lösbar ; für $n = 6$ und $m = 5$ ist es bereits (um 5 Meßwerte) überbestimmt.

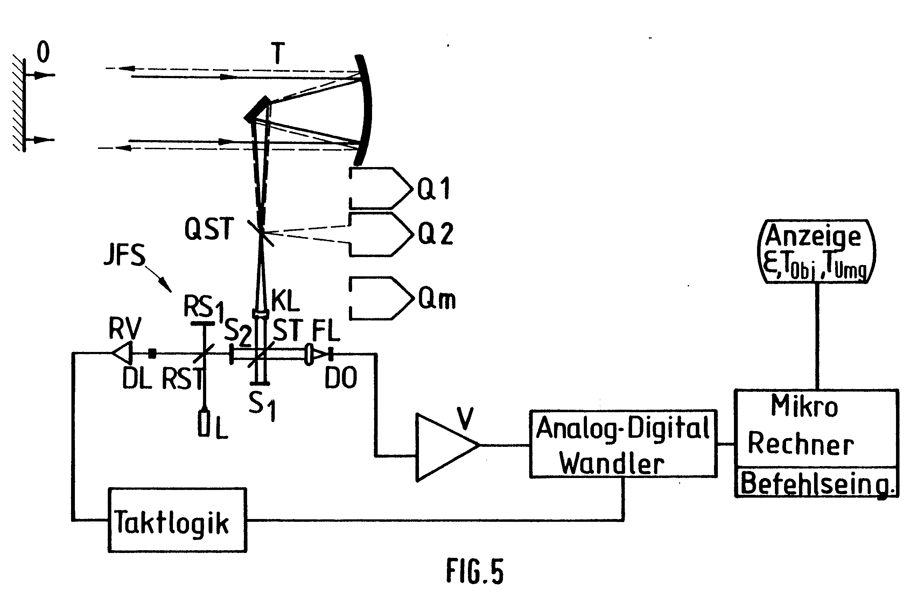

Bei der Vorrichtung nach Fig. 5 zur Durchführung des Verfahrens nach den Ansprüchen 15 bis 17 sind beispielsweise für Messungen im Infraroten m Strahlungsquellen beispielsweise in Form von Schwarzkörpern Q1 bis Qm vorgesehen, welche in einem nicht näher dargestellten Gehäuse eines Spektrometers untergebracht sind. Hierbei ist in Fig. 5 als Spektrometer wieder ein Interferometer-Spektrometer IFS, wie in Fig. 3 dargestellt. Die m Strahlungsquellen in Form von Schwarzkörpern Q1 bis Qm können mittels einer bekannten, nicht näher dargestellten Mechanik nacheinander in eine solche Lage gebracht werden, daß die von einer in die richtige Lage gebrachten Strahlungsquelle abgegebene Strahlung auf einen Strahlteiler QST fällt, oder sie kann auch mit Hilfe von Umlenkspiegeln bei fest angeordneten Strahlungsquellen auf den Strahlteiler QST gelenkt werden.

7

Der Strahlteiler QST arbeitet hierbei in bekannter Weise als halbdurchlässiger Spiegel, d. h. er reflektiert also die Hälfte der von der jeweiligen Strahlungsquelle Q auf ihn treffenden Strahlung über das ihm nachgeordnetes Teleskop T auf ein zu messendes Objekt O, während die andere Hälfte der von der jeweiligen Quelle Q abgegebene Strahlung den Strahlteiler QST passiert bzw. von diesem durchgelassen wird. (Durch einen nicht dargestellten Planspiegel, welcher gegenüber den Quellen Q1 bis Qm, d. h. auf der anderen Seite des Strahlteilers angeordnet ist, könnte der von dem Strahlteiler durchgelassene Strahlungsanteil wiederum über den Strahlteiler QST zur Hälfte in das Interferometer-Spektrometer IFS und zur Hälfte zurück in die jeweilige Quelle gelenkt werden. Dadurch käme dann eine definierte Strahlung von der « Rückseite » des Strahlteilers QST in das Spektrometer, welche wiederum in dem Gleichungssystem zu berücksichtigen wäre).

Die von dem Objekt O selbst ausgehende Strahlung sowie der von dem Objekt O reflektierte Strahlungsanteil der jeweils in Gegenüberlage von dem Strahlteiler angeordneten Strahlungsquelle Q1 bis Qm werden dann von dem Teleskop T des Interferometers IFS gesammelt und über den Strahlteiler QST sowie die Kollimatorlinse KL in das Interferometer gelenkt. In dem Interferometer IFS wird in bekannter Weise mittels des Strahlteilers ST, des festen Spiegels S1 und des beweglichen Spiegels S2 sowie der Feldlinse FL mit Hilfe des Detektors DO ein Interferogramm der einfallenden Strahlung erzeugt.

Das Interferogramm wird in der gleichen Weise, wie in Verbindung mit Fig. 1 beschrieben, verarbeitet. Alle ermittelten Werte oder einzelne Werte, wie beispielsweise die Objekttemperatur, können dann mit Hilfe des Anzeigegeräts angezeigt werden.

Bei der in Fig. 5 dargestellten Vorrichtung gemäß der Erfindung sind m (m $\geqslant$ 1) Strahlungsquellen Q1 bis Qm vorgesehen, die beispielsweise bei Messungen im infraroten Bereich auf m verschiedene Temperaturen $T_{Q1}$ bis $T_{Qm}$ aufgeheizt werden, und damit m verschiedene Intensitäten haben. Mit Hilfe des Strahlteilers QST und der bekannten, bereits erwähnten Mechanik, mit welcher entweder die m Strahlungsquellen in Form von Schwarzkörpern Q1 bis Qm vor den Strahlteiler QST bewegt werden oder aber auch die von den Schwarzkörpern Q1 bis Qm abgegebene Strahlung nacheinander über entsprechende, mechanisch gesteuerte Umlenkspiegel auf den Strahlteiler QST gelenkt wird, wird dann die Strahlung eines jeden Strahlers Q1 bis Qm über das Teleskop T auf das Objekt O gelenkt, dessen Temperatur zu bestimmen ist. Hierbei sind die Strahlungsquellen den Spektralbereichen der Messung anzupassen, so daß beispielsweise, wie vorstehend ausgeführt, im Infraroten, aber auch im Sichtbaren Schwarzkörper in Form von Hohlraumstrahlern verwendet werden, während im Ultravioletten beispielsweise Bogenlampen angewendet werden können.

Bei einer Bestrahlung mit jedem der m-Strahler wird dann eine Spektralmessung durchgeführt, wodurch dann das nachstehend angeführte System von (m + 1) · n Gleichungen erhalten wird. Hierbei ist mit n die Anzahl der verwendeten Spektralbereiche des Spektrometers bezeichnet. (Die Eigenstrahlung des Meßgeräts ist als vernachlässigbar angenommen, könnte aber auch berücksichtigt werden).

Die (m + 1) Gleichungen lauten :

$$L1_{M,\lambda_i} = t_{QST_i} \cdot r_i \cdot \tau_i \left\{ \varepsilon_i \cdot L_{T_{Obj},\lambda_i} + (1 - \varepsilon_i)(L_{T_{Umg},\lambda_i} + r_{QST_i} \cdot \Omega_Q \cdot L_{T_{Q1},\lambda_i}) \right\} \tag{7}$$

$$L2_{M,\lambda_i} = t_{QST_i} \cdot r_i \cdot \tau_i \left\{ \varepsilon_i \cdot L_{T_{Obj},\lambda_i} + (1 - \varepsilon_i)(L_{T_{Umg},\lambda_i} + r_{QST_i} \cdot \Omega_Q \cdot L_{T_{Q2},\lambda_i}) \right\} \tag{8}$$

$$Lm_{M,\lambda_i} = t_{QST_i} \cdot r_i \cdot \tau_i \left\{ \varepsilon_i \cdot L_{T_{Obj},\lambda_i} + (1 - \varepsilon_i)(L_{T_{Umg},\lambda_i} + r_{QST_i} \cdot \Omega_Q \cdot L_{T_{Qm},\lambda_i}) \right\} \tag{9}$$

$$L(m + 1)_{M,\lambda_i} = r_i \cdot \tau_i \left\{ \varepsilon_i \cdot L_{T_{Obj},\lambda_i} + (1 - \varepsilon_i) \cdot L_{T_{Umg},\lambda_i} \right\} \tag{10}$$

wobei $\Omega_Q$ der Geometrie- und Korrekturfaktor der bestrahlenden Quelle Q, $r_{QST_i}$ bzw. $t_{QST_i}$ ein spektraler Reflexions- bzw. Transmissionsgrad eines Strahlteilers der Fig. 5, und $L1_{M,\lambda_i}$ ... $Lm_{M,\lambda_i}$ das Detektorsignal ist.

Da auch die Meßwerte des Objektes O ohne eine zusätzliche Bestrahlung in den Gleichungen 7 bis 10 verwendet werden können, ist es notwendig, um bei Verwendung von m Strahlern (m + 1) · n Gleichungen zu gewinnen, daß eine Messung ohne Bestrahlung durchgeführt wird (siehe vorstehende Gl. (10)). Im allgemeinen genügt es, für diese Messung (ohne eine der zusätzlichen Strahlungsquellen) diese zusätzlichen Strahlungsquellen abzuschalten bzw. auszublenden. Bei Messungen im Infraroten ist es insbesondere bei dem Ausführungsbeispiel der Fig. 5 erforderlich, auch den Strahlteiler QST aus dem Strahlengang zu klappen, wodurch n weitere Unbekannte hinzukommen, da aus $t_{QST} \cdot r_i \cdot \tau_i$ das Produkt $r_i \cdot \tau_i$ wird. Diese weiteren n Messungen bringen bei Messungen mit dem Ausführungsbeispiel der Fig. 5 im Infraroten daher keinen weiteren Vorteil.

Ist die erfindungsgemäße Vorrichtung derart einfach aufgebaut, daß nur sichergestellt ist, daß die Temperaturen $T_{Q1}$ bis $T_{Qm}$ der Anzahl Strahlungsquellen Q1 bis Qm unterschiedlich sind, ihre genaue Größe jedoch nicht gemessen oder angezeigt wird, und sind ferner die Größen $\Omega_Q$ und $r_{QS}$ und $t_{QS}$ nicht exakt bekannt, so enthält das vorstehend wiedergegebene Gleichungssystem folgende Unbekannten :

$$m \times T_Q$$
$$n \times \varepsilon_i$$
$$n \times t_{QST_i} \cdot r_i \cdot \tau_i$$
$$n \times r_{QST_i} \cdot \Omega_Q$$
$$1 \times T_{Obj}$$
$$1 \times T_{Umg}$$
$$n \times r_i \cdot \tau_i$$

(falls ein Herausklappen des Strahlteilers QST notwendig ist).

Ferner sollen nachstehend die mit « Geometrie- und Korrekturfaktor $\Omega_Q$ » bezeichnete Größe und die mit « spektrale Empfindlichkeit $r_i$ » bezeichnete Größe in den Gln. (7) bis (10) gesondert betrachtet werden, da in diesen Größen verschiedene Werte zusammengefaßt sind. Bedingt durch die jeweils verwendete Optik empfängt das Spektralmeßgerät eine Strahlung nur aus einem bestimmten Winkelbereich (d. h. dem Gesichtsfeld bzw. dem Raumwinkel). Außerdem ist die Empfindlichkeit des Spektrometers an den Rändern seines Gesichtsfeldes kleiner als im Zentrum. Alle drei Anteile der empfangenen Strahlung, nämlich vom Objekt, von der Umgebung und von der zusätzlichen Bestrahlung, erfahren bezüglich Raumwinkel und Empfindlichkeit über das Gesichtsfeld des Spektrometers dieselbe « Behandlung » ; dies gilt für den Anteil der zusätzlichen Bestrahlung nur dann, wenn die vorstehende Empfehlung bezüglich einer vollständigen Ausleuchtung der vom Spektrometergesichtsfeld überdeckten Fläche befolgt ist. Die zahlenmäßig Berücksichtigung von Gesichtsfeldwinkel und seiner Empfindlichkeit kann daher in der Größe $r_i$ erfolgen, weshalb auch die Größe $r_i$ als die spektrale Empfindlichkeit des Spektralmeßgeräts bezeichnet wird ; streng gilt dies natürlich nur für gesichtsfeldfüllende Objekte, während im anderen Fall geometrisch korrigiert werden muß. Darüber hinaus ist in der Größe $r_i$ der Einfluß aller optischen Komponenten des Meßgeräts (wie Linsen, Spiegel, Strahlteiler, Detektor usw.) sowie der Einfluß der Elektronik auf die Strahlung und das elektrische Signal berücksichtigt.

Nunmehr soll der sogenannte Geometrie- und Korrekturfaktor $\Omega_Q$ erläutert werden. Nachdem die Umgebungsstrahlung aus dem gesamten Halbraum das Objekt bestrahlt, wobei das Objekt eine ebene Fläche sein soll, ist, nachdem im Unterschied hierzu die zusätzliche Bestrahlung nur aus einem kleineren Winkelbereich, nämlich dem Raumwinkel der bestrahlenden Optik, stammt, eine Korrekturgröße k1 einzuführen. Die Korrekturgröße k1 ist gegeben durch das Verhältnis des Raumwinkels $\Omega_B$ der bestrahlenden Optik zum Raumwinkel des Halbraums, also durch :

$$k1 = \frac{\Omega_B}{2\pi} \tag{11}$$

(Streng müßte es heißen :

$$k1 = \frac{\Omega_B}{2\pi - \Omega_B} \tag{12}$$

weil die Strahlung der Umgebung nur aus dem Winkelbereich $2\pi - \Omega_B$ auf das Objekt fällt, wobei allerdings meistens $2\pi \gg \Omega_B$ sein wird.)

Ferner ist analog zur Empfindlichkeitsverteilung über das Gesichtsfeld des Spektralmeßgeräts die Intensität der Bestrahlung am Rande des Gesichtsfeldes der bestrahlenden Optik geringer als in dessen Zentrum ; auch dieser Einfluß ist durch einen Korrekturfaktor k2 zu berücksichtigen, der eine Mittelung der Intensität über das Gesichtsfeld bewirkt.

Darüber hinaus ist auch bei stets gesichtsfeldfüllendem Objekt für die reflektierten Anteile der zusätzlichen Bestrahlung der Raumwinkel $\Omega_{RB}$, unter dem das Objekt die Spektrometeroptik « sieht », abhängig von der Entfernung zwischen Objekt und Spektrometer. Dieser Einfluß muß durch eine dritte Korrekturgröße k3 berücksichtigt werden, nämlich

$$k3 = \Omega_{RB} = \frac{A_s}{d^2} \tag{13}$$

wobei $A_S$ (cm²) die wirksame Fläche der Spektrometeraperatur und d (cm) der Abstand vom Spektrometer zum Objekt ist.

Die genannten drei Korrekturgrößen sind zusammengefaßt in dem Geometrie- und Korrekturfaktor $\Omega_Q$.

$$\Omega_Q = k1 \cdot k2 \cdot k3$$
$$= k2 \cdot \frac{\Omega_B}{2\pi} \cdot \frac{A_s}{d^2} \tag{14}$$

mit $0 < k2 < 1$.

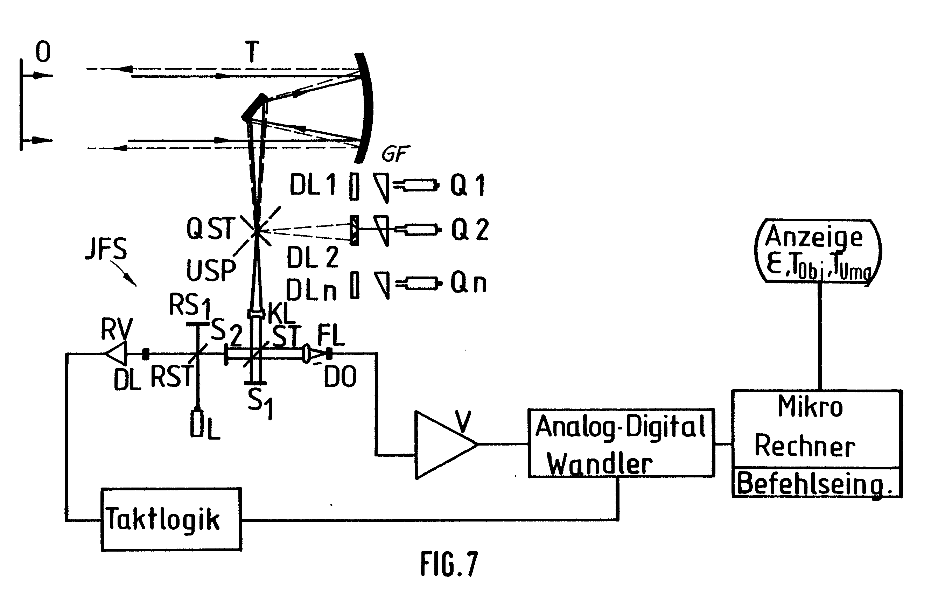

Im folgenden sollen als Beispiele zwei Ausführungsformen dargestellt werden, und die jeweils notwendige Anzahl von Spektralbereichen und Strahlern soll hierbei abgeschätzt werden. In einem später folgenden, dritten Ausführungsbeispiel sind Maßnahmen am optischen Aufbau eines entsprechenden Spektralmeß- und Bestrahlungsgeräts aufgezeigt, durch welches Meßsituationen mit einer geringen, reflektierten Energie bewältigt werden können. In einem vierten Ausführungsbeispiel sind in Anlehnung an Fig. 7 als Strahlungsquellen Dioden in Form von lichtemittierenden Dioden (LED) bzw. in Form von Laserdioden sowie Laser verwendet.

Wie bereits erwähnt, gelten die vorstehend angeführten Gl' en (7) bis (10) insbesondere für die in Fig. 5 dargestellte Ausführungsform vor allem für Messungen im Infraroten. Hierbei sind die m Strahlungsquellen, vorzugsweise Schwarzkörper Q1 bis Qm, wie ebenfalls erwähnt, in einem nicht näher dargestellten Spektrometergehäuse untergebracht, und die verwendete Optik, insbesondere in Form des Strahlteilers QST, dient sowohl zur Bestrahlung des Objektes Q als auch zum Strahlungsempfang. Hierbei wird am Objekt O die Quellenstrahlung, d. h. die Strahlung jeder gegenüber dem Strahlteiler QST angeordneten Strahlungsquelle (Q1 bis Qm), zurück zum Teleskop T reflektiert und gelangt von dort zusammen mit der vom Objekt O emittierten Strahlung und der an ihm reflektierten Umgebungsstrahlung wieder zum Strahlteiler QST. Die ankommende Strahlung wird dort zur Hälfte in das Interferometer-Spektrometer IFS durchgelassen, während die andere Hälfte von dem Strahlteiler QST in die jeweilige Strahlungsquelle reflektiert wird, wo sie absorbiert wird.

Die in Fig. 5 schematisch dargestellte Ausführungsform hat, wie bereits erwähnt, den besonderen Vorteil, daß die Strahlungsquellen Q1 bis Qm im Spektrometer selbst untergebracht sind, und über dessen Optik das Objekt bestrahlen. Hierbei muß allerdings in Kauf genommen werden, daß der Strahlteiler weniger Energie auf das Objekt und auf den Detektor überträgt, als z. B. die später beschriebene zweite Ausführungsform, und daß n weitere unbekannte Größen (falls diese nicht durch andere Messungen als bekannt eingeführt werden) zu bestimmen sind, nämlich

$$n \times r_{QST_i} \cdot \Omega_Q \cdot$$

Für den Fall von Messungen im Infraroten ergeben sich mit diesem Ausführungsbeispiel aus den Gleichungen (7) bis (10) und den vorstehenden Erläuterungen $(m + 4n + 2)$ Unbekannte ; da $(m + 1) \cdot n$ Messungen vorliegen, ist somit die Beziehung zu erfüllen :

$$m + 4\,n + 2 \leqq (m + 1) \cdot n \qquad (15)$$
$$m + 3\,n + 2 \leqq m \cdot n$$

was z. B. mit $m = 4$, also 4 Strahlungsquellen und $n = 6$, also 6 Spektralbereichen geschehen kann.

Dabei wird durch Herausklappen des Strahlteilers QST aus dem Strahlengang die entsprechende Messung ohne Bestrahlung erreicht, und es werden damit natürlich $n \times r_i \cdot \tau_i$ zusätzliche Unbekannte im System berücksichtigt.

Diese Messung ohne zusätzliche Bestrahlung ist aber, wie schon erwähnt, gerade hier wenig sinnvoll und die folgende Abschätzung verdeutlicht dies mit Zahlen :

Werden nur Messungen mit zusätzlicher Bestrahlung durchgeführt, also m. n Messungen, so ergeben sich aus den Gl' en (7) bis (10) $(m + 3n + 2)$ Unbekannte. Wie zu erwarten, ist also wieder die Beziehung zu erfüllen :

$$m + 3\,n + 2 \leqq m \cdot n \qquad (15)$$

was mit 4 Strahlungsquellen in 6 Spektralbereichen, hier allerdings nur mit m statt mit $(m + 1)$ Messungen erreicht wird.

Günstiger werden die Verhältnisse, wenn durch Abschalten oder Abblenden der Strahlungsquellen (bei unverändertem Strahlengang) eine Messung ohne Bestrahlung gewonnen werden kann ; zu erfüllen ist dann die Beziehung :

$$m + 3\,n + 2 \leqq (m + 1) \cdot n \qquad (16)$$
$$m + 2\,n + 2 \leqq m \cdot n$$

was mit $m = 3$, d. h. 3 Strahlungsquellen und $n = 5$, d. h. 5 Spektralbereichen zu realisieren ist.

Sind bei der Ausführungsform nach Fig. 5 alle Geräteparameter außer den Temperaturen $T_Q$ der zusätzlichen Strahler (z. B. durch eine Eichung) bekannt, so reduziert sich die Zahl der Unbekannten auf :

$$m \times T_{Q_i} ; \quad n \times \varepsilon_i ; \quad 1 \times T_{Obj} \text{ und } 1 \times T_{Umg}$$

und es ist die Beziehung zu erfüllen :

$$m + n + 2 \leqq (m + 1) \cdot n \qquad (17)$$
$$m + 2 \leqq m \cdot n$$

# EP 0 143 282 B1

was mit m = 1, also einer zusätzlichen Strahlungsquelle, und n = 3, also 3 Spektralbereichen bereits geschehen ist.

In einem zweiten Ausführungsbeispiel soll die Bestrahlungsvorrichtung eine eigene Optik (Teleskop) haben ; daher können Spektrometer und Bestrahlungseinheit als getrennte Geräte ausgeführt werden ; allerdings können sie auch in einem Gerät zusammengefaßt werden. In jedem Falle ist es notwendig, die gesamte, vom Spektrometer erfaßte Fläche zu bestrahlen. Wegen des hier fehlenden Strahlteilers QST können in jedem Fall Messungen ohne Bestrahlung sinnvoll verwendet werden.

Im allgemeinen Fall sind dabei unbekannt :

$$m \times T_Q \; ; \quad n \times \varepsilon_i \; ; \quad n \times r_i \cdot \tau_i \; ; \quad 1 \times T_{Obj} \; ; \quad 1 \times T_{Umg} \text{ und } 1 \times \Omega_Q \, .$$

Es ist also die Beziehung zu erfüllen :

$$m + 2n + 3 \leqq (m+1) \cdot n \tag{18}$$
$$m + n + 3 \leqq n \cdot m$$

was mit m = 2, also 2 Strahlungsquellen und n = 5, also 5 Spektralbereichen zu realisieren ist.

Wird auch hier eine Eichung durchgeführt und der Faktor $\Omega_Q$ als bekannt eingeführt, so gelten dieselben Beziehungen wie im vorhergehenden Beispiel ; das Gleichungssystem wird also bestimmt mit einer zusätzlichen Strahlungsquelle und n = 3 Spektralbereichen.

Im folgenden sollen Beispiele von Energieabschätzungen für ein Gerät entsprechend Fig. 5 Aufschluß über notwendige Stahlertemperaturen bzw. zu erwartende Strahlungsflüsse geben. Dabei ist die Größe k3 aus Gl.(13) zu

$$k3 = \Omega_{RB} = \frac{A_s}{d^2} = 1 \tag{19}$$

angenommen ; das gilt für das folgende Beispiel nur bei einem Abstand d zwischen Objekt und Spektrometerteleskop von etwa 4 bis 5 cm. Eine Verdopplung dieses Abstandes führt zu einer Verringerung der reflektierten Energie zusätzlicher Bestrahlung auf 1/4.

Das Teleskop des Geräts soll einen Primärspiegel von DP = 5 cm Durchmesser haben und einen Sekundärspiegel von DS = 1 cm, die Brennweite ist BW = 10 cm. Die wirksame Apertur $A_S$ des Spektrometerteleskops ergibt sich dann zu :

$$A_S = \frac{1}{4} \pi (DP^2 - DS^2) \quad [cm^2]$$
$$A_S = 18{,}85 \, cm^2 \tag{20}$$

Soll der Gesichtsfeldwinkel $\alpha_S = 5°$, also der Raumwinkel $\Omega_S = 0{,}598.10^{-2} sr$ betragen, so ergibt sich die notwendige Detektor- bzw. Strahlerfläche (DF bzw. SF) aus :

$$\Omega_s = \frac{SF}{BW^2} \quad [sr] \tag{21}$$

zu SF = 0,598 cm², womit der Durchmesser SD des Strahlers SD = 0,873 cm wird.

Mit dem Gerät soll die Temperatur $T_{Obj}$ eines Objektes bestimmt werden, dessen Emissionsgrad $\varepsilon_{Obj} = 0{,}2$ (Reflexionsgrad $\zeta_{Obj} = 0{,}8$) betrage, und das sich in einer Umgebung der Temperatur $T_{Umg} = 300 \, K$ befinde, wobei das Objekt die Temperatur $T_{Obj} = 360 \, K$ habe.

Bei einer Wellenlänge von 8,5 $\mu$m ergibt sich dann die Strahldichte $L_{Obj}$ des Objektes zu :

$$L_{Obj} = (0{,}2 \cdot 0{,}246 \cdot 10^{-2} + 0{,}8 \cdot 0{,}955 \cdot 10^{-3}) \, W/sr \cdot cm^2 \cdot \mu m$$
$$L_{Obj} = (0{,}492 \cdot 10^{-2} + 0{,}764 \cdot 10^{-3}) \, W/sr.cm^2 \cdot \mu m$$
$$= 5{,}684 \cdot 10^{-3} \, W/sr \cdot cm^2 \cdot \mu m$$

Der von diesem Objekt in das genannte Meßgerät eintretende Strahlungsfluß $P_{Obj}$ ergibt sich aus :

$$P_{Obj} = L_{Obj} \cdot A_S \cdot \Omega_s \quad [W/\mu m] \tag{22}$$

zu

$$P_{Obj} = 64{,}07 \cdot 10^{-5} \, W/\mu m \, .$$

Hat der zur Bestrahlung verwendete Schwarzkörper Q1 die Temperatur $T_{Q1} = 600 \, K$, so ist seine Strahldichte $L_{Q1}$ bei 8,5 $\mu$m :

11

$$L_{Q1} = 0{,}17 \cdot 10^{-1} \, W/sr \cdot cm^2 \cdot \mu m \, .$$

Der über die Optik austretende Strahlungsfluß $P_{Q1}$ berechnet sich aus :

$$P_{Q1} = r_{QST} \cdot L_{Q1} \cdot SF \cdot \Omega_s \qquad (23)$$

mit $r_{QST} = 0{,}5$ zu $P_{Q1} = 3{,}04 \cdot 10^{-5} \, W/\mu m$ .

Unter der Voraussetzung, daß die am Objekt reflektierte Strahlung wieder vollständig von der Optik aufgenommen wird, ergibt sich der Strahlungsfluß dieses reflektierten Anteils aus :

$$P_{RQ1} = P_{Q1} \cdot \rho_{Obj} \quad \text{zu}$$
$$P_{RQ1} = 2{,}432 \cdot 10^{-5} \, W/\mu m \, , \qquad (24)$$

das sind etwa 3,7 % des gesamten Strahlungsflusses, der in das Gerät eintritt. Der Anteil der reflektierten Strahlung der Umgebung beträgt 12,95 % am Gesamtfluß. Führt man obige Abschätzung für die Wellenlänge 4,0 μm bei sonst identischen Parametern durch, so ergeben sich :

$P_{Obj} = 18{,}51 \cdot 10^{-5} \, W/\mu m$
$P_{Q1} = 5{,}26 \cdot 10^{-5} \, W/\mu m$
$P_{RQ1} = 4{,}20 \cdot 10^{-5} \, W/\mu m$

und der Anteil der reflektierten Strahlung macht etwa 18,5 % des gesamten Strahlungsflusses aus ; der Anteil der reflektierten Umgebungsstrahlung beträgt 28,6 %.

Diese Abschätzung führt für eine Quellentemperatur $T_{Q2} = 700$ K bei sonst unveränderten Parametern zu folgenden Größen ;
für eine Wellenlänge von 8,5 μm

$P_{Obj} = 64{,}07 \cdot 10^{-5} \, W/\mu m$
$P_{RQ2} = 3{,}76 \cdot 10^{-5} \, W/\mu m \triangleq 5{,}54 \, \%,$

beträgt der Anteil reflektierter Umgebungsstrahlung 12,76 % ;
für eine Wellenlänge von 4,0 μm :

$P_{Obj} = 18{,}51 \cdot 10^{-5} \, W/\mu m$
$P_{RQ2} = 9{,}94 \cdot 10^{-5} \, W/\mu m \triangleq 34{,}94 \, \%$

beträgt der Anteil reflektierter Umgebungsstrahlung 22,87 %.

Die aufgeführten Beispiele zeigen, daß die Anteile der verschiedenen Strahlungsquellen (Objekt, Umgebung, Quellen Q1 bis Qm) am gesamten Strahlungsfluß vergleichbare Größen haben, und daß die Quellen Q1 bis Qm auch bei nicht zu hohen Temperaturen $T_{Q1}$ bis $T_{Qm}$ ausreichende Energie liefern ; natürlich ist für den jeweiligen Anwendungsfall eine vergleichende Auswahl geeigneter Wellenlängenbereiche durchzuführen.

Aus obigen Energiebetrachtungen ist unmittelbar ersichtlich, daß der Emissionsgrad (Reflexionsgrad) des betrachteten Objektes von großem Einfluß auf die Wirksamkeit des durchzuführenden Verfahrens ist. Mit abnehmendem Reflexionsgrad wird der Anteil reflektierter Quellenstrahlung zunehmend geringer und verschwindet irgendwann im Rauschen. Die Forderung nach einer ausreichenden Intensität reflektierter Quellenstrahlung kann entweder durch die Erhöhung der Intensität der Quelle selbst (beispielsweise durch eine höhere Temperatur) oder durch eine andere Bestrahlungsgeometrie (und Meßgeometrie) erfüllt werden, indem die Bestrahlungs- und Meßoptik auf das Objekt fokussiert wird. Damit wird einerseits die Energiedichte der Bestrahlung erhöht und andererseits ein kleineres Flächenelement (wählbarer Größe) des Objektes « gesehen » und somit weniger Objektstrahlung und reflektierte Umgebungsstrahlung empfangen. Ein Gerät läßt sich sowohl mit einer festen als auch mit einer variablen Brennweite ausbilden.

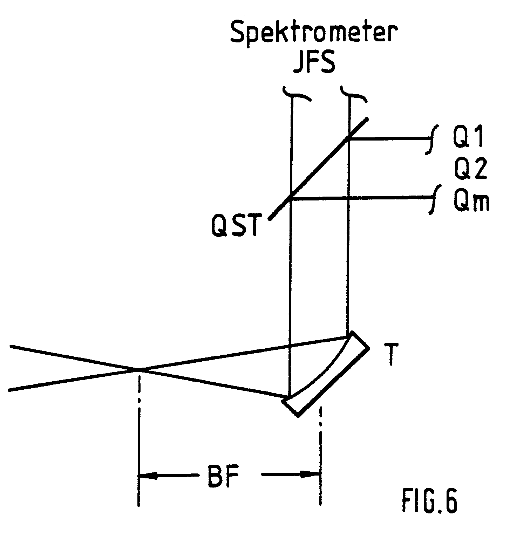

Fig. 6 zeigt schematisch einen Strahlengang vor der Optik einer fokussierbaren Ausführungsform. Hieraus ist ersichtlich, daß der Betrag der reflektierten Quellenenergie weitgehend unabhängig vom Abstand zwischen einem Objekt O und dem Meßgerät (Spektrometer) ist, solange dieser Abstand nicht größer als eine Brennweite BF ist, während der Betrag der empfangenen Objektstrahlung der reflektierten Umgebungsstrahlung in jedem Fall entfernungsabhängig ist.

Zur Überwindung der Schwierigkeiten aufgrund geringer reflektierter Energien eignen sich zur Bestrahlung darüber hinaus besonders entsprechende Laser bzw. Laserdioden und auch lichtemittierende Dioden (LED's), da sie in einem schmalen Spektralbereich mit hoher Energie strahlen. In bekannter Weise sind sie im Pulsbetrieb verwendbar, was der Forderung nach kurzzeitiger Bestrahlung zur Vermeidung einer Aufheizung des Objektes entgegenkommt. Die Verwendung von Laser, Laserdioden und auch LED's ist besonders geeignet für einen Aufbau der Vorrichtung nach Fig. 5, bei welcher die Bestrahlung und Messung mit einer gemeinsamen Optik erfolgt und somit eine vergleichsweise einfache Realisierung ermöglicht. (Die Verwendung von Schwarzkörpern hoher Temperaturen erfordert einen großen Aufwand an thermischer Isolierung). Außerdem ermöglicht bei Lasern, Laserdioden und auch LED's deren verhältnismäßig geringer Bedarf an elektrischer Energie die Ausbildung tragbarer Geräte.

Einige Besonderheiten bei der Verwendung von LED's, Laserdioden und Laser sollen im folgenden erläutert werden. Während LED's Strahlung einer festen Wellenlänge emittieren, sind bei Laserdioden und Lasern auch Bauarten mit einer einstellbaren bzw. durchstimmbaren Wellenlänge erhältlich. Werden solche Quellen mit fester Wellenlänge verwendet, wird für jede Wellenlänge eine Diode bzw. ein Laser benötigt ; es werden also insgesamt n Laser oder Dioden Q1 bis Qn in Fig. 7 benötigt, deren Aufbau im übrigen dem der Fig. 5 entspricht.

Bei Verwendung nur einer durchstimmbaren Quelle kann eine große Anzahl von n verschiedenen Wellenlängen zur Messung verwendet werden, insbesondere wenn das Spektrometer ein kontinuierlich messendes Fourierspektrometer ist, beispielsweise ein Interferometer, wie es in Fig. 7 dargestellt ist. Wenn der durchstimmbare Wellenlängenbereich nicht groß genug ist, müssen zwei oder mehr durchstimmbare Quellen verwendet werden.

Laser und Laserdioden emittieren eine Strahlung in einem räumlich eng begrenzten Bündel ; die Bestrahlung des Objektes sollte jedoch über die ganze, vom Gesichtsfeld des Spektrometers überdeckte Fläche erfolgen. (Sie sollte nicht punktförmig wie bei einer unbeeinflußten Laserstrahlung sein). Kommerzielle Strahlaufweiter, die vor die Quellen Q1 bis Qn in Fig. 7 gesetzt sind, sorgen für den gewünschten Durchmesser der Strahlenbündel ; in vielen Fällen dürften, wie in Fig. 7 dargestellt, jeweils einfache Diffusoren DL1 bis DLn beispielsweise in Form von starken Folien aus Teflon (eingetragenes Warenzeichen) genügen, um die Bündel aufzuweiten.

Im allgemeinen wird die optische Bandbreite (der Wellenlängenbereich) der Laser bzw. Dioden schmaler sein als die der Messung und damit als der jeweilige Wellenlängenbereich des Spektrometers. Werden die Wellenlängenbereiche des Spektrometers so ausgelegt, daß die Bestrahlungswellenlängen jeweils etwa in der Mitte der Meßbereiche liegen, so kann für beide in der Regel derselbe Reflexionsgrad des Objektes angenommen werden, da der mittlere Reflexionsgrad des Objektes in einem relativ breiten Meßbereich etwa gleich dem Reflexionsgrad in der Mitte des Bereichs ist.

Zu beachten ist, daß auf LED's, Laserdioden und Laser das Planck'sche Strahlungsgesetz nach den Gl'en (7), (8) oder (9) nicht anwendbar ist, d. h. daß im Term $r_{QST_i} \cdot \Omega_Q \cdot L_{T_Q, \lambda_i}$ die Größe $L_{T_Q, \lambda_i}$ nicht nach Planck berechnet werden kann ; vielmehr muß hier eine gemessene oder eine aus früherer Eichung bekannte Strahlungsintensität der jeweiligen Quelle (bei der entsprechenden Wellenlänge) eingegeben werden. Ihre Messung kann bei dem Ausführungsbeispiel der Fig. 7 derart erfolgen, daß über eine Mechanik anstelle des Strahlteilers QST ein gestrichelt wiedergegebener Umlenkspiegel USP in den Strahlengang eingebracht wird, in der Weise, daß er die Strahlung der Quellen Q1 bis Qn direkt in das Spektrometer lenkt. Werden die so gemessenen Strahlungsintensitäten mit $I_{L, \lambda_i}$ bezeichnet, so ist leicht einzusehen, daß anstelle der Größe $L_{T_Q, \lambda_i}$ in den Gl'en (7), (8) oder (9) die Größe

$$I_{L, \lambda_i} \cdot \frac{1}{r_i}$$

stehen muß.

Die Änderungen der Strahlungsintensitäten zur Erlangung von m verschiedenen Bestrahlungsstärken bei den n Bestrahlungswellenlängen kann durch definierte Strahlungsdämpfungselemente, wie beispielsweise Graufilter oder Graukeile GF in Fig. 7 erreicht werden, die zweckmäßigerweise mit Strahlaufweitern, beispielsweise in Form von Diffusoren DL1 bis DLn, kombiniert werden. Der Dämpfungsfaktor wird dabei jeweils über die Messung der Größen $I_{L, \lambda_i}$ als bekannt in das Gleichungssystem eingeführt.

Sind in dem Ausführungsbeispiel nach Fig. 7 alle Gerätekomponenten (beispielsweise durch eine Eichung) bekannt, dann sind, da die Größen $I_{L, \lambda_i}$ gemessen werden, nur noch $n \times \varepsilon_i$, $T_0$ und $T_u$ unbekannt ; demgegenüber stehen $(m + 1) \cdot n$ Meßwerte. Somit ist also die folgende Bedingung zu erfüllen :

$$n + 2 \leqslant (m + 1) \cdot n$$

$$2 \leqslant m \cdot n \qquad (24)$$

mit m = 1, d. h. einem Betrieb mit n Laserquellen oder Dioden, bzw. mit einer durchstimmbaren Quelle bei den n Wellenlängen mit nur einer Intensität (ohne eine Veränderung der Dämpfung) ergibt sich schon bei n = 2 Wellenlängen ein bestimmtes Gleichungssystem. Hierbei sei noch einmal betont, daß die Gewinnung und Verarbeitung überbestimmter Gleichungssysteme (durch die Anwendung der Ausgleichsrechnung) zu besonders genauen Ergebnissen führt. Für ein nach Fig. 5 ausgebildetes Gerät mit den obigen Randbedingungen (Gl. (24)) ist beispielsweise der Freiheitsgrad F (oder die Zahl der überbestimmt vorliegenden Messungen) :

$$F = (m + 1) \, n - (n + 2)$$

$$= n - 2 \qquad (20)$$

Grundsätzlich sind alle bekannten und auch in der Zukunft zu erwartenden Laser bzw. Dioden für diese Anwendungen geeignet bzw. werden es sein ; hierfür seien als Beispiele genannt :
durchstimmbare Bleisalzlaserdioden im Bereich von 3 $\mu$m bis 30 $\mu$m
Wellenlänge mit Stimmbereichen von 20 $cm^{-1}$ bis 300 $cm^{-1}$ für unterschiedliche Typen ;
durchstimmbare $CO_2$ Laser im Bereich 9 $\mu$m bis 11 $\mu$m,
durchstimmbare Kryptonlaser im Bereich 0,33 $\mu$m bis 0,799 $\mu$m,
durchstimmbare Farbstofflaser im Bereich von 0,19 $\mu$m bis 5 $\mu$m.
(In allen Anwendungsfällen sollen selbstverständlich die optischen Achsen von Empfang und Bestrahlung senkrecht auf dem Objekt stehen.)

Mit der Erfindung können also bei unveränderten Größen von Objekt und Umgebung Meßdaten für ein bestimmtes bzw. überbestimmtes Gleichungssystem gewonnen werden. Ein besonderer Vorteil der Vorrichtungen gemäß der Erfindung ist darin zu sehen, daß mit ihnen ein sich ändernder spektraler Emissionsgrad des Objektes auch bei konstanter Objekttemperatur bestimmt werden kann, oder aber insbesondere auch bei sich ändernder Objekttemperatur eine eventuell vorliegende Temperaturabhängigkeit des Emissionsgrades, d. h. auch eine Änderung des Emissionsgrades, erfaßt wird. Insbesondere können durch die Verwendung von Dioden oder Lasern mit geringem Aufwand tragbare Geräte ausgebildet werden.

## Patentansprüche

1. Verfahren zur berührungslosen, emissionsgradunabhängigen Strahlungsmessung der Temperatur eines Objektes, bei welchem Verfahren in n Wellenlängenbereichen (Spektralbändern) im Sichtbaren und/oder Infraroten und bei m Temperaturen des Objektes nacheinander Strahldichten oder -stärken erfaßt werden, dadurch gekennzeichnet, daß aus einer Reihe von jeweils mindestens n = 4 Spektralbereichen aus den Messungen von mindestens m = 3 verschiedenen Temperaturen des Objekts (O) ein Gleichungssystem von $n \cdot m = 12$ Unbekannten und $n \cdot m = 12$ Meßwerten gebildet wird ; durch das Gleichungssysstem die Meßwerte mit Hilfe des Planck'schen Strahlungsgesetzes jeweils als Summe der Strahldichte (-stärke) eines Strahlers mit der Temperatur und dem spektralen Emissionsgrad ($\varepsilon_i$) des Objektes und der Strahldichte (-stärke) eines Strahlers (von Umgebungseinflüssen) mit der Temperatur der Umgebung, die am Objekt mit einem spektralen Reflexionsgrad des Objektes ($\zeta_i = 1 - \varepsilon_i$, $\varepsilon_i$ spektraler Emissionsgrad) reflektiert wird, bei den jeweils n Meßwellenlängen ($\lambda_i$) dargestellt werden, wobei die Summe noch mit einem Produkt ($r_i \cdot \tau_i$) aus der spektralen Empfindlichkeit ($r_i$) des Meßgerätes und dem Transmissionsgrad ($\tau_i$) der Atmosphäre multipliziert wird, welches Produkt auch bei den jeweils n Meßwellenlängen ($\lambda_i$ mit i = 4,... ..., n ;) ermittelt werden, und die bei der Lösung des Gleichungssystems gefundenen m Objekttemperaturen als die wahren m Objekttemperaturen ermittelt wird.

2. Verfahren nach Anspruch 1, dadurch gekennzeichnet, daß der bei der Lösung des Gleichungssystems gefundene, spektrale Emissionsgrad des Objektes (n Werte des spektralen Emissionsgrades bei den n Wellenlängen eines Meßgerätes) als der wahre spektrale Emissionsgrad des Objektes (O) ermittelt wird.

3. Verfahren nach Anspruch 1, dadurch gekennzeichnet, daß die bei der Lösung des Gleichungssystems gefundene(n) Umgebungstemperatur (Umgebungstemperaturen — bei thermisch inhomogener Umgebung) als die wahre(n) Umgebungstemperatur (Umgebungstemperaturen bei thermisch inhomogener Umgebung) ermittelt wird (werden).

4. Verfahren nach Anspruch 1, dadurch gekennzeichnet, daß die bei der Lösung des Gleichungssystems gefundene(n) Temperatur des Meßgeräts (Temperaturen der inneren Oberfläche des Meßgeräts) als die wahre(n) Temperatur (Temperaturen der inneren Oberflächen des Meßgeräts ermittelt wird (werden).

5. Verfahren nach Anspruch 1, dadurch gekennzeichnet, daß das bei der Lösung gefundene Produkt ($r_i \cdot \tau_i$) aus der spektralen Empfindlichkeit ($r_i$) des Meßgeräts und dem spektralen Transmissionsgrad ($\tau_i$) der Atmosphäre (n Werte bei den n Wellenlängen des Meßgeräts) als das wahre Produkt ($r_i \cdot \tau_i$) aus der spektralen Empfindlichkeit ($r_i$) des Meßgeräts und dem spektralen Transmissionsgrad ($\tau_i$) der Atmosphäre ermittelt wird.

6. Verfahren nach Anspruch 1, dadurch gekennzeichnet, daß alle aus dem Gleichungssystem ermittelten Größen, nämlich m Objekttemperaturen, die Umgebungstemperatur (Umgebungstemperaturen — thermisch inhomogener Umgebung), die innere Temperatur des Meßgeräts, n Werte des spektralen Emissionsgrades des Objektes und n Werte des Produktes $r_i \cdot \tau_i$ aus der spektralen Empfindlichkeit $r_i$ des Meßgerätes und dem spektralen Transmissionsgrad $\tau_i$ der Atmosphäre ausschließlich durch Lösung des Gleichungssystems rechnerisch aus den Meßwerten ermittelt werden.

7. Verfahren nach Anspruch 1, dadurch gekennzeichnet, daß bei entsprechend großer Wahl von n Spektralbereichen und/oder m Objekttemperaturen die Anzahl $n \cdot m$ der voneinander unabhängigen Meßwerte zunehmend größer ist als die Zahl der unbekannten Größen, daß damit ein überbestimmtes Gleichungssystem gebildet wird, und dieses Gleichungssystem mit Hilfe der Ausgleichsrechnung gelöst wird, und daß dadurch Meßungenauigkeiten ausgeglichen werden, wodurch die ermittelten Werte der unbekannten Größen genauer werden.

8. Verfahren nach Anspruch 1, dadurch gekennzeichnet, daß andere als die bisher genannten, unbekannten, zu bestimmenden Größen, beispielsweise mehrere Umgebungstemperaturen bei thermisch inhomogener Umgebung, die von der Atmosphäre emittierte Strahlung, oder der spektrale Transmissionsgrad des Objektes, falls dieses strahlungsdurchlässig ist, oder mehrere Objekttemperaturen gleichzeitig oder nacheinander bei thermisch inhomogenen Objekten oder das Objekt und/oder die Umgebung betreffende Geometriefaktoren, generell alle Faktoren, die die vom Objekt ausgehende Strahlung, ihren Weg zum Meßgerät und im Meßgerät bis zum endgültigen Meßwert in irgendeiner Weise beeinflussen, in das Gleichungssystem eingeführt werden, entsprechend der so gegebenen Anzahl von Unbekannten durch entsprechende Wahl von n Spektralbereichen und m Objekttemperaturen ein System von entsprechend vielen $n \cdot m$ Meßwerten erfaßt wird, und das damit erstellte Gleichungssystem gelöst oder ausgleichend gelöst wird und dabei alle Unbekannten bestimmt oder ausgleichend bestimmt werden.

9. Verfahren nach Anspruch 1, dadurch gekennzeichnet, daß das Verfahren in entsprechender Weise angewandt wird, wenn die Objekttemperatur unverändert ist, die Umgebungstemperatur von selbst oder erzwungen verschiedene Werte annimmt.

10. Verfahren nach Anspruch 1, dadurch gekennzeichnet, daß für wiederholte Messungen alle aus vorhergehenden Meßgängen ermittelten Größen, welche als unveränderlich anzusehen sind (wie beispielsweise das Produkt $r_i \cdot \tau_i$), als bekannte Größen in das Gleichungssystem aufgenommen werden, und daß dabei aus einer verringerten Anzahl von Meßwerten (beispielsweise einer Messung bei nur einer ($m = 1$) Objekttemperatur) die verbleibenden unbekannten Größen bestimmt oder ausgleichend bestimmt werden.

11. Verfahren nach Anspruch 1, dadurch gekennzeichnet, daß bei einer entsprechend großen Anzahl von m (verschiedenen Temperaturen des Objekts oder auch der Umgebung, etc.) und von n Spektralbereichen (Wellenlängenbereichen) des Meßgerätes nur die Meßwerte selbst bekannt sein müssen, und daß alle unbekannten Größen, auch die Spektralbereiche (Wellenlängenbereiche) des Meßgeräts berechnet oder ausgleichend berechnet werden.

12. Verfahren nach einem der Ansprüche 1 bis 11, dadurch gekennzeichnet, daß zur Strahlungsmessung ein Interferometerspektrometer (IFS) verwendet wird, dabei die Anzahl n der spektralen Bereiche (Meßwerte) sehr hoch wählbar ist, die spektralen Meßwerte alle dieselbe spektrale Breite (in $[cm^{-1}]$, also Wellenzahlen) haben, und daher die Rechnungen in Wellenzahlen $[cm^{-1}]$ oder Wellenlängen $[\mu m]$ durchgeführt werden (d. h. eine Korrektur unterschiedlicher spektraler Breiten der Meßbereiche entfällt).

13. Verfahren zur berührungslosen, emissionsgradunabhängigen Strahlungsmessung der Temperatur eines Objektes, bei welchem Verfahren in n Wellenlängenbereichen (Spektralbändern) im Ultravioletten, Sichtbaren und/oder Infraroten nacheinander Strahldichten oder -stärken erfaßt werden, dadurch gekennzeichnet, daß die Strahlung einer Anzahl von m ($m \geq 1$) Strahlungsquellen (Q1 bis Qm) nacheinander über eine Optik (QST, T) auf das Objekt (O) gelenkt wird, daß die davon jeweils am Objekt (O) reflektierte Strahlung gemeinsam mit der vom Objekt (O) emittierten Strahlung und der am Objekt (O) reflektierten Umgebungsstrahlung in n Spektralbereichen ($n \geq 3$) erfaßt wird, und daß damit ein Gleichungssystem von $n \cdot (m + 1)$ Meßwerten, wobei ein Satz von Meßwerten ohne zusätzliche Bestrahlung gewonnen wird, gebildet wird, in welchem die Meßwerte mit Hilfe des Planck'schen Strahlungsgesetzes als Summe der Strahldichte (-stärke) eines Strahlers mit der Temperatur und dem spektralen Emissionsgrad ($\varepsilon_i$) des Objektes (O), der Strahldichte (-stärke) eines Strahlers mit der Temperatur der Umgebung und der Strahldichte (-stärke) eines weiteren Strahlers mit der Temperatur (Intensität) der jeweiligen zur Bestrahlung des Objektes (O) verwendeten Strahlungsquelle (Q1 bis Qm) dargestellt werden, wobei die beiden letzteren Strahldichten (-stärken) am Objekt (O) mit dem spektralen Reflexionsgrad ($\zeta_i = 1 - \varepsilon_i$) reflektiert werden, und aus diesem Gleichungssystem die Temperatur des Objektes (O), die Temperatur der Umgebung und die Temperatur der einen oder der Strahlungsquellen (Q1 bis Qm) sowie die Werte des spektralen Emissionsgrades des Objektes (O) als deren wahre Werte ermittelt werden.

14. Verfahren nach Anspruch 13, dadurch gekennzeichnet, daß bei entsprechend großer Wahl der Anzahl von Spektralbereichen und der Anzahl der zusätzlichen Strahlungsquellen (Q1 bis Qm) weitere Größen aus dem Gleichungssystem als die jeweils wahren Größen errechnet werden können, wie beispielsweise die die besondere Bestrahlungsgeometrie kennzeichnenden Größen oder die spektrale Empfindlichkeit ($r_i$) des Meßgeräts, oder auch das Produkt ($r \cdot \tau_i$) aus der spektralen Empfindlichkeit ($r_i$) des Meßgeräts und dem Transmissionsgrad ($\tau_i$) der Atmosphäre oder andere, so daß hierdurch eine selbstkalibrierende Messung ermöglicht ist.

15. Verfahren nach einem der Ansprüche 13 oder 14, dadurch gekennzeichnet, daß bei entsprechend großer Wahl von n Spektralbereichen und/oder m Strahlungsquellen (Q1 bis Qm) die Anzahl $n \cdot m$ der voneinander unabhängigen Meßwerte zunehmend größer ist als die Zahl der unbekannten Größen, daß damit ein überbestimmtes Gleichungssystem gebildet wird, daß dieses Gleichungssystem mit Hilfe der Ausgleichsrechnung gelöst wird, und daß dadurch Meßungenauigkeiten ausgeglichen werden, wodurch die ermittelten Werte der unbekannten Größen genauer werden.

16. Vorrichtung zur Durchführung des Verfahrens nach einem der Ansprüche 13 bis 15, mit einem Teleskop, mit einem Spektralmeßgerät, das über eine Taktlogik einen Analog-Digital-Wandler speist, dem ein Mikrorechner mit Befehlseingabe und -anzeige nachgeschaltet ist, dadurch gekennzeichnet, daß im Spektralmeßgerät (IFS) die m (m ≧ 1) Strahlungsquellen (Q1 bis Qm) angeordnet sind, und daß zwischen Teleskop (T) und Spektralmeßgerät (IFS) ein Strahlteiler (QST) vorgesehen ist, über welchen nacheinander jeweils die Strahlung einer der m Strahlungsquellen (Q1 bis Qm) über das Teleskop (T) auf das Objekt (O) gelenkt wird.

17. Vorrichtung nach Anspruch 16, dadurch gekennzeichnet, daß zur Bestrahlung in allen Wellenlängenbereichen als Strahlungsquellen Laser, Laserdioden oder lichtemittierende Dioden (LED's) (Q1 bis Qn) vorgesehen sind, so daß, falls diese Strahler mit festen Wellenlängen emittieren, eine Anzahl n (entsprechend den n Wellenlängenbereichen der Messung) dieser Laser, Laserdioden oder lichtemittierenden Dioden notwendig ist.

18. Vorrichtung nach Anspruch 16, dadurch gekennzeichnet, daß zur Bestrahlung in allen Wellenlängenbereichen als Strahlungsquelle(n) ein durchstimmbarer Laser oder eine durchstimmbare Laserdiode oder weniger als n bezüglich ihrer Wellenlängen durchstimmbare Laser vorgesehen sind.

19. Vorrichtung nach den Ansprüchen 16 bis 18, dadurch gekennzeichnet, daß zum Erreichen einer homogenen Beleuchtung des Objektes (O) jeweils ein jeder Strahlungsquelle (Laser, Laserdiode oder LED (Q1 bis Qn)) zugeordneter Strahlaufweiter (DL1 bis DLn) vorgesehen ist, und daß die Anzahl (m > 1) unterschiedlicher Intensitäten der Bestrahlung durch die Verwendung von Strahlungsdämpfungselementen (GF) ermöglicht ist, wobei die jeweilige Intensität der zusätzlichen Bestrahlung beispielsweise über einen Umlenkspiegel (USP) direkt vom Spektrometer (IFS) gemessen wird und diese gemessenen Intensitäten in das Gleichungssystem (als bekannt) eingeführt werden.

**Claims**

1. Method for the contactless radiation measurement, independently of emissivity, of the temperature of an object, in which method beam densities or intensities are detected one after the other in n wavelength ranges (spectral bands) in the visible and/or infrared part of the spectrum and at m temperatures of the object, characterised thereby, that an equation system of $n \cdot m = 12$ unknowns and $n \cdot m = 12$ measurement values is formed from a series each time of at least $n = 4$ spectral ranges from the measurements of at least $m = 3$ different temperatures of the object, the measurement values are represented at the respective n measurement wavelengths ($\lambda_i$) through the equation system and with the aid of Plank's law of radiation each time as sum of the beam density (intensity) of a radiator at the temperature and with the spectral emissivity ($\varepsilon_i$) of the object and of the beam density (intensity) of a radiator (of environmental influences) at the ambient temperature, which is reflected at the object with a spectral emissivity of the object ($\zeta_i = 1 - \varepsilon_i$, $\varepsilon_i$ spectral emissivity), wherein the sum is still multiplied by a product ($r_i \cdot \tau_i$) of the spectral sensitivity ($r_i$) of the measuring apparatus and the transmissivity ($\tau_i$) of the atmosphere, which product is also determined at each of the n measurement wavelengths ($\lambda_i$ with $i = 4, .. ..., n$) and the m object temperatures found in the solution of the equation system are determined as the true m object temperatures.

2. Method according to claim 1, characterised thereby, that the spectral emissivity of the object (n values of the spectral emissivity at the n wavelengths of a measuring apparatus) found in the solution of the equation system is determined as the true spectral emissivity of the object (O).

3. Method according to claim 1, characterised thereby, that the ambient temperature(s) (ambient temperatures in the case of thermally inhomogeneous surroundings) found in the solution of the equation system is or are determined as the true ambient temperature(s) (ambient temperatures in the case of thermally inhomogeneous surroundings).

4. Method according to claim 1, characterised thereby, that the temperature(s) of the measuring apparatus (temperatures of the inner surface of the measuring apparatus) found in the solution of the equation system is or are determined as the true temperature(s) (temperatures of the inner surfaces of the measuring apparatus).

5. Method according to claim 1, characterised thereby, that the product ($r_i \cdot \tau_i$) of the spectral sensitivity ($r_i$) of the measuring apparatus and the spectral transmissivity ($\tau_i$) of the atmosphere (n values at the n wavelengths of the measuring apparatus) found in the solution is determined as the true product ($r_i \cdot \tau_i$) of the spectral sensitivity ($r_i$) of the measuring apparatus and the spectral transmissivity ($\tau_i$) of the atmosphere.

6. Method according to claim 1, characterised thereby, that all magnitudes determined from the equation system, namely m object temperatures, the ambient temperature (ambient temperatures in the case of thermally inhomogeneous surroundings), the internal temperature of the measuring apparatus, n values of the spectral emissivity of the object and n values of the product ($r_i \cdot \tau_i$) of the spectral sensitivity ($r_i$) of the measuring apparatus and the spectral transmissivity ($\tau_i$) of the atmosphere are determined exclusively by solution of the equation system mathematically from the measurement values.

7. Method according to claim 1, characterised thereby, that with correspondingly great selection of n spectral ranges and/or m object temperatures, the number n · m of the mutually independent measurement values is increasingly greater than the number of the unknown magnitudes, that an equation system determined with redundancy is formed thereby and this equation system is solved with the aid of the balancing calculation and that measurement inaccuracies are balanced out thereby, whereby the determined values of the unknown magnitudes become more accurate.

8. Method according to claim 1, characterised thereby, that other than the hitherto named unknown magnitudes to be determined, for example several ambient temperatures in the case of thermally inhomogeneous surroundings, the radiation emitted by the atmosphere or the spectral transmissivity of the object in case this is permeable by radiation or several object temperatures at the same time or one after the other in the case of thermally inhomogeneous objects or geometric factors concerning the object and/or the surroundings and generally all factors, which in any manner influence the radiation emanating from the object, its path to and in the measuring apparatus up to the final measurement value, are introduced into the equation system, that a system of correspondingly many n · m measurement values is detected in correspondence with the thus given number of unknowns through corresponding choice of n spectral ranges and m object temperatures and the equation system set up thereby is solved or solved in the balancing manner and all unknowns are then determined or determined in balancing manner.

9. Method according to claim 1, characterised thereby, that the method is applied in appropriate manner when the object temperature is unchanged and the ambient temperature on its own or constrainedly assumes different values.

10. Method according to claim 1, characterized thereby, that for repeated measurements, all magnitudes, which have been determined from preceding measurement steps and are to be regarded as invariable (such as for example the product $r_i \cdot \tau_i$), are taken up as known magnitudes into the equation system and that the remaining unknown magnitudes are then determined or determined in balancing manner from a reduced number of measurement values (for example a measurement at only one m = 1 object temperature).

11. Method according to claim 1, characterised thereby, that only the measurement values themselves need be known in the case of an appropriately great number of m (different temperatures of the object or also of the surroundings and so forth) and of n spectral ranges (wavelength ranges) of the measuring apparatus and that all unknown magnitudes, also the spectral ranges (wavelength ranges) of the measuring apparatus are calculated or calculated in balancing manner.

12. Method according to one of the claims 1 to 11, characterised thereby, that an interferometer spectrometer (IFS) is used for the radiation measurement, for which the number n of the spectral ranges (measurement values) is selectably very high, the spectral measurement values all have the same spectral width (in [cm$^{-1}$], thus wave numbers) and the calculations are therefore performed in wave numbers [cm$^{-1}$] or wavelengths [micrometres] (i. e. a correction of different spectral widths of the measurement ranges becomes superfluous).

13. Method for the contactless radiation measurement, independently of emissivity, of the temperature of an object, in which method beam densities or intensities are detected one after the other in n wavelength ranges (spectral bands) in the ultra-violet, visible and/or infra-red part of the spectrum, characterised thereby, that the radiation of a number of m (m ≧ 1) radiation sources (Q1 to Qm) one after the other is deflected by way of an optical system (QST, T) onto the object (O), that the radiation thereof respectively reflected at the object (O) together with the radiation emitted by the object (O) and the ambient radiation reflected at the object (O) is detected in n spectral ranges (n ≧ 3) and that an equation system of n · (m + 1) measurement values is formed therewith, wherein one set of measurement values is obtained without additional radiation, in which the measurement values are represented with the aid of Planck's law of radiation as sum of the beam density (intensity) of a radiator at the temperature and with the spectral emissivity ($\varepsilon_i$) of the object (O), of the beam density (intensity) of a radiator at the ambient temperature and of the beam density (intensity) of a further radiator at the temperature (intensity) of the respective radiation source (Q1 to Qm) used for irradiation of the object (O), wherein both the latter beam densities (intensities) are reflected at the object (O) with the spectral reflectivity ($\zeta_i = - \varepsilon_i$), and the temperature of the object (O), the ambient temperature and the temperature of the radiation source or sources (Q1 to Qm) as well as the values of the spectral emissivity of the object (O) are determined as their true values from this equation system.

14. Method according to claim 13, characterised thereby, that with correspondingly great selection of the number of spectral ranges and the number of the additional radiation sources (Q1 to Qm), further magnitudes can be calculated from the equation system beyond the respective true magnitudes, such as for example the magnitudes characterising the spectral radiation geometry or the spectral sensitivity (r) of the measuring apparatus or also the product ($r_i \cdot \tau_i$) of the spectral sensitivity ($r_i$) of the measuring apparatus and the transmissivity ($\tau_i$) of the atmosphere so that a self-calibrating measurement is made possible hereby.

15. Method according to one of the claims 13 or 14, characterised thereby, that with correspondingly great selection of n spectral ranges and/or m radiation sources (Q1 to Qm), the number n · m of the mutually independent measurement values is increasingly greater than the number of the unknown magnitudes, that an equation system determined with redendancy is formed thereby and this equation system is solved with the aid of the balancing calculation and that measurement inaccuracies are balanced out thereby, whereby the determined values of the unknown magnitudes become more accurate.

16. Apparatus for the performance of the method according to one of the claims 13 to 15, with a telescope, with a spectral measuring device which by way of a logic cycling system feeds an analog-to-digital converter which is followed by a microcomputer with command input and indication, characterised thereby, that the m ($m \geqq 1$) radiation sources (Q1 to Qm) are arranged in the spectral measuring device (IFS) and that a beam splitter (QST), by way of which each time the radiation of one of the m radiation sources (Q1 to Qm) one after the other is deflected by way of the telescope (T) onto the object (O), is provided between the telescope (T) and the spectral measuring device (IFS).

17. Apparatus according to claim 16, characterised thereby, that lasers, laser diodes or light-emitting diodes (LED's) (Q1 to Qn) are provided as radiation sources for irradiation in all wavelength ranges so that, in case these radiators emit at fixed wavelengths, a number n (corresponding to the n wavelength ranges of the measurement) of these lasers, laser diodes or light-emitting diodes is necessary.

18. Apparatus according to claim 16, characterized thereby, that a tunable laser or a tunable laser diode or less than n lasers, which are tunable in respect of their wavelengths, are provided as radiation source(s) for irradiation in all wavelength ranges.

19. Apparatus according to the claims 16 to 18, characterised thereby, that for the attainment of an homogeneous illumination of the object (O), a beam spreader (DL1 to DLn) respectively associated with each radiation source (laser, laser diode or LED (Q1 to Qn)) is provided and that the number ($m > 1$) of different intensities of the irradiation is made possible by radiation attenuation elements (GF), wherein the respective intensity of the additonal radiation is measured for example directly by the spectrometer (IFS) by way of a deflecting mirror (USP) and these measured intensities are introduced (as known) into the equation system.

### Revendications

1. Procédé pour déterminer sans contact la température d'un objet en mesurant le rayonnement indépendamment de son facteur d'émission, dans lequel des densités ou intensités de rayonnement sont successivement déterminées dans n gammes de longueurs d'onde (bandes spectrales) dans le domaine du visible et/ou de l'infrarouge et pour m températures de l'objet, caractérisé en ce qu'il est formé un système d'équations de $n \cdot m = 12$ inconnues et de $n \cdot m = 12$ valeurs de mesure à partir d'une série de respectivement au moins $n = 4$ gammes spectrales et à partir des mesures d'au moins $m = 3$ températures différentes de l'objet (O) ; les valeurs de mesure étant déterminées par le système d'équations à l'aide de la loi de rayonnement de Planck respectivement sous forme d'une somme des densités (intensités) de rayonnement d'un corps rayonnant présentant la température et le facteur d'émission spectrale ($\varepsilon_i$) de l'objet et la densité (intensité) de rayonnement d'un corps rayonnant (provenant des influences du milieu environnant) présentant la température du milieu environnant, qui est réfléchie par l'objet selon un facteur de réflexion spectrale de l'objet ($\zeta_i = 1 - \varepsilon_i$, $\varepsilon_i$ étant le facteur d'émission spectrale), dans lequel sont respectivement représentées n longueurs d'onde de mesure ($\lambda_i$), la somme étant en outre multipliée par un produit ($r_i \cdot \tau_i$) formé par la sensibilité spectrale ($r_i$) de l'appareil de mesure et par le facteur de transmission ($\tau_i$) de l'atmosphère, ce produit étant déterminé également pour les n longueurs d'onde de mesure respectives ($\lambda_i$ avec i = 4,... ..., n), et les m températures de l'objet qui sont trouvées par la résolution du système d'équations étant déterminées comme étant les m températures réelles de l'objet.

2. Procédé selon la revendication 1, caractérisé en ce que le facteur d'émission spectrale de l'objet (n valeurs du facteur d'émission spectrale pour les n longueurs d'onde d'un appareil de mesure) qui a été trouvé pour la résolution du système d'équations est déterminé comme étant le facteur d'émission spectrale réel de l'objet (O).

3. Procédé selon la revendication 1, caractérisé en ce que la température du milieu environnant (ou les températures du milieu environnant quand il s'agit d'un milieu environnant thermiquement non homogène) qui sont trouvées par la résolution du système d'équations est (ou sont) considéré(s) comme étant la (ou les) valeur(s) réelle(s) de la température du milieu environnant (ou des températures du milieu environnant quand il s'agit d'un milieu environnant qui n'est pas thermiquement homogène).

4. Procédé selon la revendication 1, caractérisé en ce que la température de l'appareil de mesure (ou les températures de la surface intérieure de l'appareil de mesure) qui a (ou ont) été trouvée(s) par la résolution du système d'équations est (ou sont) considérée(s) comme la (ou les) température(s) vraie(s) de la surface intérieure de l'appareil de mesure.

5. Procédé selon la revendication 1, caractérisé en ce que le produit ($r \cdot \tau_i$) de la sensibilité spectrale ($r_i$) de l'appareil de mesure et du facteur de transmission spectrale ($\tau_i$) de l'atmosphère (n valeurs pour les n longueurs d'onde de l'appareil de mesure) qui a été trouvé par la solution est considéré comme représentant le produit réel ($r_i \cdot \tau_i$) de la sensibilité spectrale ($r_i$) de l'appareil de mesure et du facteur de transmission spectrale ($\tau_i$) de l'atmosphère.

6. Procédé selon la revendication 1, caractérisé en ce que toutes les valeurs déterminées par le système d'équations, à savoir m températures de l'objet, la température du milieu environnant (ou les températures du milieu environnant quand le milieu environnant n'est pas thermiquement homogène), la température intérieure de l'appareil de mesure, n valeurs du facteur d'émission spectrale de l'objet et n valeurs du produit $r_i \cdot \tau_i$ formé par la sensibilité spectrale $r_i$ de l'appareil et le degré de transmission spectrale $\tau_i$ de l'atmosphère sont déterminées exclusivement à partir des valeurs de mesure, par calcul et par résolution du système d'équations.

7. Procédé selon la revendication 1, caractérisé en ce que pour un choix important de n gammes spectrales et/ou de m températures de l'objet, le nombre n · m de valeurs de mesure indépendantes les unes des autres augmente plus vite que le nombre de grandeurs inconnues, en ce qu'il est ainsi constitué un système d'équations redondant, et ce système d'équations est résolu à l'aide d'un calcul de compensation, et en ce que les imprécisions de la mesure sont ainsi compensées, les valeurs obtenues pour les grandeurs inconnues étant ainsi plus précises.

8. Procédé selon la revendication 1, caractérisé en ce que d'autres grandeurs inconnues et à déterminer, différentes de celles mentionnées jusqu'ici, telles que plusieurs températures du milieu environnant quand le milieu environnant est thermiquement non homogène, le rayonnement émis par l'atmosphère, ou le facteur de transmission spectrale de l'objet dans le cas où ce dernier laisse passer le rayonnement, ou plusieurs températures de l'objet, simultanément ou successivement dans le cas d'objets qui ne sont pas thermiquement homogènes, ou des facteurs de géométrie concernant l'objet et/ou le milieu environnant, et de façon générale tous les facteurs qui ont une influence d'une façon quelconque sur le rayonnement émis par l'objet, sur son parcours vers l'appareil de mesure et dans l'appareil de mesure jusqu'à la valeur de mesure définitive, sont introduites dans le système d'équations, un système de n · m valeurs de mesure étant déterminé en fonction du nombre ainsi donné d'inconnues par un choix correspondant de n gammes spectrales et de m températures de l'objet, et le système d'équations étant ainsi constitué est résolu, ou résolu par compensation, et toutes les inconnues étant ainsi déterminées, ou déterminées par compensation.

9. Procédé selon la revendication 1, caractérisé en ce que le procédé est utilisé de façon correspondante quand la température de l'objet est stable et la température du milieu environnant présente d'elle-même ou de façon forcée des valeurs diverses.

10. Procédé selon la revendication 1, caractérisé en ce que pour réaliser des mesures répétées, toutes les grandeurs déterminées à partir de mesures précédentes, qui sont considérées comme invariables (comme par exemple le produit $r_i \cdot \tau_i$), sont reprises comme grandeurs connues dans le système d'équations, et en ce que les grandeurs inconnues restantes sont déterminées, ou sont déterminées par compensation, à partir d'un nombre réduit de valeurs de mesure (par exemple une mesure de seulement une (m = 1) température de l'objet).

11. Procédé selon la revendication 1, caractérisé en ce que pour un nombre élevé de m (températures différentes de l'objet ou également du milieu environnant, etc.) et de n gammes spectrales (gammes de longueurs d'onde) de l'appareil de mesure, seules les valeurs de mesure elles-mêmes doivent être connues, et en ce que toutes les grandeurs inconnues, y compris les domaines spectraux (gammes de longueurs d'onde) de l'appareil de mesure, sont calculées, ou calculées par compensation.

12. Procédé selon l'une des revendications 1 à 11, caractérisé en ce que pour réaliser la mesure du rayonnement, on utilise un interféromètre-spectromètre (IFS) de manière à pouvoir choisir un nombre très élevé n de domaines spectraux (valeurs de mesure), les valeurs de mesure spectrale ont toutes la même largeur spectrale ([en $cm^{-1}$], soit en nombre d'ondes), et les calculs sont ainsi effectués en nombres d'onde [$cm^{-1}$] ou en longueurs d'onde [$\mu m$] (une correction de largeurs spectrales différentes des domaines de mesure devenant inutile).

13. Procédé pour déterminer sans contact la température d'un objet en mesurant le rayonnement de l'objet indépendamment de son facteur d'émission, dans lequel des densités ou des intensités de rayonnement sont successivement déterminées dans n gammes de longueurs d'onde (bandes spectrales) dans le domaine du rayonnement ultraviolet, visible et/ou infrarouge, caractérisé en ce que le rayonnement d'un nombre m (m $\geq$ 1) de sources de rayonnement (Q1 à Qm) est dévié successivement par un système optique (QST, T) sur l'objet (O), en ce que le rayonnement respectivement réfléchi par l'objet (O) est détecté en même temps que le rayonnement émis par l'objet (O) et le rayonnement du milieu environnant réfléchi par l'objet (O) dans n domaines spectraux (n $\geq$ 3), et en ce qu'il est ainsi constitué un système d'équations de n · (m + 1) valeurs de mesure, un jeu de valeurs de mesure sans irradiation additionnelle étant ainsi obtenu, dans lequel les valeurs de mesure sont représentées à l'aide de la loi de rayonnement de Planck sous forme de la somme de la densité (intensité) du rayonnement d'un corps rayonnant présentant la température et le facteur d'émission spectrale ($\varepsilon_i$) de l'objet (O), de la densité (intensité) du rayonnement d'un corps rayonnant présentant la température du milieu environnant et la densité (intensité) du rayonnement d'un autre corps rayonnant présentant la température (intensité) de la source de rayonnement (Q1 à Qm) utilisée pour irradier l'objet (O), les deux dernières densités (intensités) du rayonnement de l'objet (O) présentant le degré de réflexion spectrale ($\zeta_i = 1 - \varepsilon_i$) étant réfléchies, et la température de l'objet (O), la température du milieu environnant et la température de l'une ou des sources de rayonnement (Q1 à Qm) ainsi que les valeurs du facteur d'émission spectrale de l'objet (O) étant déterminées comme étant leurs valeurs réelles à partir de ce système d'équations.

14. Procédé selon la revendication 13, caractérisé en ce que pour un choix élevé du nombre de

19

domaines spectraux et du nombre de sources de rayonnement additionnelles (Q1 à Qm), on peut calculer d'autres grandeurs en tant que grandeurs réelles respectives à partir du système d'équations, comme par exemple les grandeurs caractérisant la géométrie particulière du rayonnement ou la sensibilité spectrale ($r_i$) de l'appareil de mesure, ou encore le produit $r_i \cdot \tau_i$ de la sensibilité spectrale ($r_i$) de l'appareil de mesure par le facteur de transmission ($\tau_i$) de l'atmosphère, ou autres, de façon qu'une mesure auto-calibrante soit ainsi rendue possible.

15. Procédé selon les revendications 13 ou 14, caractérisé en ce que pour un choix élevé de n domaines spectraux et/ou de m sources de rayonnement (Q1 à Qm), le nombre n · m de valeurs de mesure indépendantes les unes des autres augmente plus vite que le nombre des grandeurs inconnues, et en ce qu'un système d'équations redondant est ainsi formé, en ce que ce système d'équations est résolu à l'aide du calcul par compensation et en ce que les imprécisions de la mesure sont ainsi compensées, les valeurs déterminées pour les grandeurs inconnues étant de ce fait plus précises.

16. Dispositif pour la mise en œuvre du procédé selon l'une des revendications 13 à 15, comprenant un télescope avec un appareil de mesure spectrale qui alimente un convertisseur analogique-numérique par l'intermédiaire d'une logique cadencée, en aval duquel est monté un microordinateur avec entrée et affichage de commandes, caractérisé en ce que les m (m ≧ 1) sources de rayonnement (Q1 à Qm) sont disposées dans l'appareil de mesure spectrale (IFS) et en ce qu'il est prévu entre le télescope (T) et l'appareil de mesure spectrale (IFS) un diviseur de rayonnement (QST) par lequel le rayonnement est successivement dévié depuis l'une des m sources de rayonnement (Q1 à Qm) vers l'objet (O) par l'intermédiaire du télescope (T).

17. Dispositif selon la revendication 16, caractérisé en ce que pour réaliser l'irradiation dans toutes les gammes de longueurs d'onde, on prévoit en tant que sources de rayonnement des lasers, des diodes laser ou des diodes émettrices de lumière (LED) (Q1 à Qn), de manière que dans le cas où ces émetteurs de rayonnement émettent sur des longueurs d'onde fixes, un nombre n (correspondant aux n gammes de longueurs d'onde de la mesure) de ces lasers, diodes laser ou diodes émettrices de lumière soit nécessaire.

18. Dispositif selon la revendication 16, caractérisé en ce que pour effectuer l'irradiation dans toutes les gammes de longueurs d'onde, on prévoit en tant que source ou sources de rayonnement un laser de fréquence variable, une diode laser de fréquence variable ou au moins n lasers de fréquence variable concernant leurs longueurs d'onde.

19. Dispositif selon les revendications 16 à 18, caractérisé en ce que pour déterminer un éclairage homogène de l'objet (O), on prévoit un élargisseur de rayonnement (DL1 à DLn) associé à chaque source de rayonnement (laser, diode laser ou LED) (Q1 à Qm), et en ce que le nombre (m > 1) d'intensités différentes du rayonnement est rendu possible par l'utilisation d'éléments d'amortissement de rayonnement (GF), l'intensité respective ou le rayonnement additionnel étant mesuré, par exemple par l'intermédiaire d'un miroir déviateur (USP), directement depuis le spectromètre (IFS) et en ce que ces intensités mesurées sont introduites (en tant que valeurs connues) dans le système d'équations.

EP 0 143 282 B1

FIG.1

FIG.2

Weglänge 3.0 m

Wellenlänge (Mikrometer)

Transmissionsgrad

FIG.3

EP 0 143 282 B1

FIG. 4

Anzeige ε, $T_{Obj}$, $T_{Umg}$

Mikro Rechner

Befehlseing.

Analog-Digital Wandler

V

Q1

Q2

Qm

T

KL

QST

ST FL

DO

RS1

S2

S1

JFS

RV

DL RST

L

Taktlogik

O

**FIG. 5**

Spektrometer
JFS

Q1
Q2
Qm

QST

T

BF

FIG.6

FIG.7

EP 0 143 282 B1